# EUROPEAN PATENT APPLICATION

(11) **EP 4 783 658 A1**
(43) Date of publication of application: **29.07.2026**
(21) Application number: 23952768.2
(22) Date of filing: 24.09.2023
(51) Int. Cl.: H04W 28/02

(54) **PROCESSING METHOD FOR DELAY STATUS REPORT, USER EQUIPMENT, AND BASE STATION**

(71) Applicant: Shenzhen TCL New Technology Co., Ltd, Shenzhen, Guangdong 518052 (CN)
(72) Inventor: ZHANG, Yincheng, Shenzhen, Guangdong 518052 (CN); WANG, Liping, Shenzhen, Guangdong 518052 (CN)
(74) Representative: Herrero & Asociados, S.L.
(86) International application number: PCT/CN2023/120911
(87) International publication number: WO 2025/060116

(57) **Abstract**

A processing method for a delay status report (DSR). A user equipment generates a DSR and reports same, wherein when a buffer status report (BSR) is configured, the DSR is first generated and/or reported. On the basis of the DSR generated by the user equipment, when the BSR is configured, the user equipment first generates the DSR and reports same, and a network node receives the BSR or the DSR.

## Description

### Technical Field

The present application relates to the field of wireless communication technologies, and in particular to a delay status report processing method, as well as user equipment and base stations.

### Background

The design of 5G wireless communication systems aims to deliver enhanced mobile broadband communications (eMBB), ultra reliable and low latency communications (URLLC), and massive machine type communications (mMTC) services. For the 5G New Radio (NR), extended reality (XR) services encompass a comprehensive range of augmented reality (AR), virtual reality (VR), and mixed reality (MR) applications. XR type services and applications typically exhibit characteristics and requirements for high throughput and low latency, with cloud gaming also embodying similar demands. XR and cloud gaming are pivotal applications that 5G is expected to support. According to the output results of research projects conducted by the 3rd Generation Partnership Project (3GPP) RAN, SA, and CT technical working groups, it has been found that, under general circumstances, due to certain unique characteristics of XR services, the current 5G systems may not adequately support XR services.

XR represents a service that necessitates high real-time performance, substantial and variable data rates, low latency, and elevated reliability. Particularly, the demands for real-time performance and low latency, if unmet, can significantly impair user experience. For instance, in certain types of video data, correct decoding and reconstruction of a frame of the video data can only occur when the XR application on the client-side successfully receives all associated packets of the video data frame within the required time window; otherwise, all packets pertaining to that frame may become outdated and rendered unusable, leading to a marked deterioration in video display quality.

To accommodate the aforementioned characteristics and requirements of XR services, comprehensive discussions were held at the recent 3GPP RAN1 and RAN2 meetings, leading to some consensus. In the 18th edition of the XR work item, a proposal was introduced for the user equipment (UE) to report delay status information concerning buffered data packets to the base station (gNB) for the purpose of facilitating timely scheduling of uplink XR service data by the gNB.

Regarding the reporting of delay status information for buffered data packets, the Medium Access Control (MAC) layer entity of the UE submits this information to the BS via a newly defined MAC control element (CE). The content of this report encompasses remaining time information along with the corresponding data volume, collectively referred to as the Delay Status Report (DSR). The remaining time information is derived from a discard timer associated with a Service Data Unit (SDU) or a Protocol Data Unit (PDU). Upon the arrival of an SDU or PDU at the Packet Data Convergence Protocol (PDCP) or Radio Link Control (RLC) entity, a discard timer is initiated, commencing its count from zero, with a predetermined timeout value assigned. When the elapsed time on the discard timer exceeds or meets this timeout value, the discard timer is considered to have timed out. The time remaining prior to timeout typically represents a specific time range, such as from 0 to 10 milliseconds (ms) or from 10 to 20 milliseconds, among others. The corresponding data volume refers to the aggregate data amount of all SDUs or PDUs within a specific remaining time range, commonly termed as buffer size, which may be quantified, for instance, in bits (e.g., 1000 bits) or bytes (e.g., 200 bytes). According to the latest advancements in technical discussions, the delay-related information and data volume within the DSR framework are generally calculated based on the Logical Channel Group (LCG).

The existing technology presents the following issue: there is a lack of a coordination mechanism between the DSR and the Buffer Status Report (BSR), resulting in information redundancy and subsequent resource wastage.

When a considerable number of DSRs are generated, there exist outdated or unnecessary DSRs, which consequently leads to a wastage of uplink resources.

### SUMMARY

One objective of the present disclosure is to propose a delay status report processing method, as well as a user equipment and base stations.

In a first aspect, an embodiment of the present disclosure provides a delay status report processing method, executable in a user equipment, comprising:
generating and reporting a Delay Status Report (DSR), wherein, when a Buffer Status Report (BSR) is configured, generation and/or reporting of the DSR is prioritized.

In a second aspect, an embodiment of the present disclosure provides a user equipment, which comprises a processor and memory, wherein the processor is configured to invoke and execute a computer program stored in the memory, thereby enabling the device equipped with the processor to perform the disclosed method.

In a third aspect, provides a delay status report processing method, executed in a network node, comprising:
receiving a Buffer Status Report (BSR) or a Delay Status Report (DSR);
wherein based on the DSR generated by a user equipment, when the BSR is configured, the user equipment prioritizes generation and reporting of the DSR

In a fourth aspect, an embodiment of the present disclosure provides a base station, comprising a processor and memory, wherein the processor is configured to invoke and execute a computer program stored in the memory, thereby enabling the equipped with the processor to perform the disclosed method.

The disclosed methods may be encoded as computer-executable instructions stored in a non-transitory computer-readable medium. When loaded onto a computer, the non-transitory computer-readable medium instructs the computer's processor to execute the disclosed method.

Non-transitory computer-readable media may comprise at least one member selected from the following group: hard disks, CD-ROMs, optical storage devices, magnetic storage devices, read only memory, programmable read only memory, erasable programmable read only memory (EPROM), electrically erasable programmable read only memory (EEPROM), and flash memory.

The disclosed method may be configured as a computer program product, which enables a computer to execute the disclosed method.

The disclosed method can be implemented as a computer program, which enables the computer to carry out the disclosed method.

### Technical effect:

The technical advantages and effects of the embodiments of the present disclosure regarding the coordination of BSR and DSR are as follows:
The BSR and DSR methodologies facilitate the efficient utilization of wireless resources, thereby enhancing overall system throughput and user experience. BSR enables the base station to dynamically allocate resources based on the user's buffer size, mitigating both resource wastage and congestion. Meanwhile, DSR allows the base station to prioritize the scheduling of delay-sensitive services in accordance with the user's latency requirements, thus reducing latency and jitter.

The coordination of BSR and DSR serves to diminish signaling overhead and conserve network resources. Both BSR and DSR are event-triggered reporting mechanisms that only transmit updates when there are changes in the user's buffer size or delay status; they may also incorporate periodic reporting and padding updates. This approach effectively reduces unnecessary signaling transmissions, consequently lowering signaling interference and overall network load.

### BRIEF DESCRIPTION OF THE DRAWINGS

One or more embodiments are exemplarily illustrated through the corresponding images in the accompanying drawings. These exemplary illustrations do not constitute a limitation of the embodiments. Elements marked with the same reference numerals in the drawings signify similar components, unless explicitly stated otherwise. The representations in the drawings do not impose proportional constraints. The classifications of the various embodiments provided hereinafter are for convenience of description and should not restrict the specific implementations of embodiments of the present disclosure. Each embodiment may be combined and referenced with one another, provided there are no contradictions.
FIG. 1 is a schematic illustration depicting packet sets with different PDU Set Importance Indicators (PSI).
FIG. 2 is a schematic representation illustrating a communication system.
FIG. 3 is a schematic illustration depicting the various layers of the communication protocol.
FIG. 4 is a schematic representation illustrating the method described in an embodiment of the present disclosure.
FIG. 5 is a schematic representation illustrating the method described in an embodiment of the present disclosure.
FIG. 6 is a schematic diagram depicting the chip of an embodiment of the present disclosure.
FIG. 7 is a schematic diagram illustrating the chip of an embodiment of the present disclosure.

### DETAILED DESCRIPTION

In order to provide a clearer understanding of the objectives, technical solutions, and advantages of the present application, the following is a more detailed explanation of certain embodiments of this application in conjunction with the accompanying drawings. It should be understood that the specific embodiments described herein are intended solely to illustrate the application and are not meant to limit the scope thereof.

The embodiment of the present disclosure pertains to wireless communication systems, and more specifically, to a 5G New Radio (NR) wireless communication system, wherein user equipment (UE) reports the delay status information of uplink data packets to the base station (gNB) in order to support XR services. These services encompass typical forms such as AR, VR, and MR.

Moreover, in addition to the DSR, there exists a BSR mechanism specifically designed for the transmission of uplink service data and its resource scheduling. Within the BSR mechanism, the gNB configures the following information to the UE via RRC messages:
periodic BSR timer (periodicBSR-Timer);
BSR retransmission timer (retxBSR-Timer);
logical channel group (logicalChannelGroup);
logical channel SR delay timer (logicalChannelSR-DelayTimer);
application of the logical channel SR delay timer (logicalChannelSR-DelayTimerApplied);
mask of the logical channel SR (logicalChannelSR-Mask);

The UE aggregates the total volume of packets from all logical channels within the buffer, calculated on a per LCG basis, commonly referred to as the buffer size. This information is subsequently reported to the gNB via the BSR MAC CE, enabling the gNB to perform resource scheduling and allocation in accordance with the data volume required for transmission from the UE side.

On the other hand, XR services typically encompass multiple service data flows, each with potentially varying Quality of Service (QoS) requirements. Specifically, for certain video data streams, there may exist integrity requirements among multiple SDUs or PDUs, necessitating that all SDUs or PDUs are transmitted correctly; otherwise, they are subject to complete discard. For instance, during the transmission of a frame, it may be segmented into multiple SDUs or PDUs. For data streams with integrity requirements (corresponding to a QoS flow), the PDU Set Integrated Handling Indication (PSIHI) is defined to configure an indication of the integrity transmission requirements for a PDU Set associated with a QoS flow. The PDU Set refers to a collection of multiple SDUs or PDUs or packets that share a certain interrelationship; for example, it may consist of the segmented SDUs or PDUs or packets derived from the transmission of a single video frame. Furthermore, within the same QoS flow, there may be various types of PDU Sets, which could differ in certain aspects. For instance, during network congestion, the drop priorities of different types of PDU Sets may vary. The PDU Set Importance Indicator (PSI) is defined to dynamically indicate the significance of a particular PDU Set.

DSR is an emerging concept, and the associated procedural mechanisms are still in the research and discussion phase. There is currently a lack of detailed documentation addressing the coordination between DSR and BSR technologies, as well as any disclosures concerning the technical solutions for controlling DSR trigger events.

For the discard mechanisms based on PSI, the following established solutions have been identified: (1) a scheme based on PSI thresholds, and (2) a scheme based on PSI and discard timer (PSI + discard timer).
(1) A scheme based on PSI thresholds: Utilizing a maximum of 16 levels of PSI values, when congestion occurs, the gNB indicates a PSI threshold to the UE according to the logic channel group (LCG). Based on this PSI threshold, the UE discards all PDUs categorized as having low significance (those with PSI values below or exceeding the PSI threshold).
(2) A scheme based on PSI and discard timer (PSI + discard timer): One example of this scheme involves configuring the discard timer with three distinct timeout values, referred to as timeout value 1, timeout value 2, and timeout value 3. On the UE side, the discard timer typically utilizes a timeout value of 1 under normal conditions. When the gNB indicates to the UE that network congestion has occurred, it simultaneously specifies a PSI threshold, whereby the discard timer for PDUs classified as having low significance (those with PSI values below or exceeding the PSI threshold) adopts timeout value 2; conversely, the discard timer for PDUs categorized as having high significance (those with PSI values below or exceeding the PSI threshold) employs timeout value 3.

One example of this scheme involves configuring two timeout values for the discard timer at each level of PSI: timeout value 4 and timeout value 5. On the UE side, the discard timer typically utilizes timeout value 4 under normal conditions; however, when the gNB indicates to the UE that network congestion has occurred, the discard timer employs timeout value 5.

Based on the requirements of XR services, to enhance the support for gNB uplink resource scheduling and the discarding of uplink data at the UE side during network congestion, the embodiments of the present disclosure propose a mechanism for the coordination of three types of DSR and BSR. This mechanism is designed to ensure information consistency while avoiding redundancy that could lead to resource wastage. The coordination mechanism between DSR and BSR specifically includes:
Selective configuration of either DSR or BSR;
Simultaneous configuration of DSR and BSR, wherein the triggering of DSR results in the cancellation of the corresponding BSR;
Simultaneous configuration of DSR and BSR, wherein both DSR and BSR are triggered concurrently, facilitating complementary information exchange and other related schemes.

Simultaneously, in order to mitigate unnecessary DSR reports, the embodiments of the present disclosure introduce a DSR mask mechanism based on data attributes and a DSR mask mechanism based on remaining time, grounded on the generated rules for triggering DSR. Furthermore, the embodiments of the present disclosure propose the discarding of uplink data, distinguishing the integrity indicators of packet collections corresponding to SDUs or PDUs in accordance with their respective QoS flows. This allows for the selection of various discard strategies based on configuration information, as well as the selection of different discarding approaches according to varying levels of congestion.

From the aforementioned description, it is evident that both DSR and BSR encompass data volume information, specifically, the buffer size. When both DSR and BSR pertain to the same LCG, it is manifestly necessary to establish a coordination mechanism between DSR and BSR to ensure information consistency and to prevent information redundancy, thereby conserving resources.

The most fundamental triggering mechanism for DSR is based on the reduction of remaining time. Given that the remaining time for SDU or PDU of each PDU Set within the buffer consistently diminishes, this invariably prompts the UE to initiate DSR. Consequently, this may lead to a considerable generation of DSRs, some of which could be outdated or unnecessary. Should these DSR MAC CEs need to be reported to the gNB, it could result in the inefficient utilization of uplink resources.

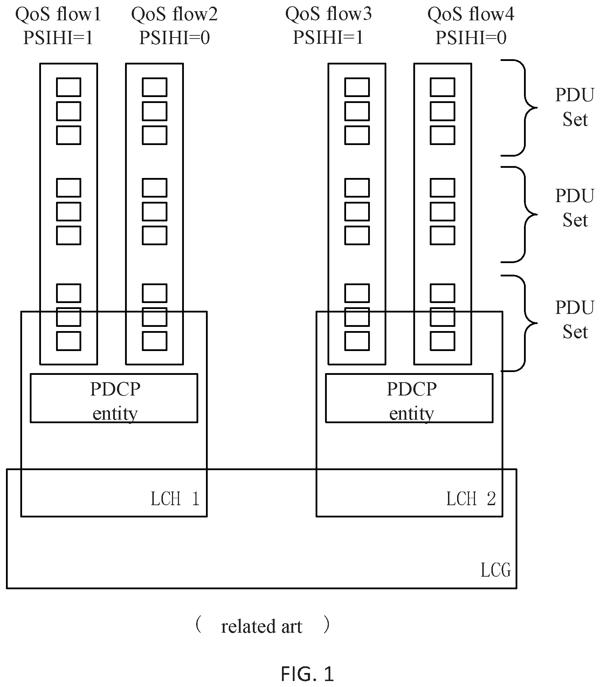

In the context of uplink transmission, existing multiple dropping schemes based on PSI exhibit certain deficiencies, particularly in that they do not adequately account for the requirements of PHISI. As illustrated in FIG. 1, multiple QoS flows are mapped to the same Data Radio Bearer (DRB), with each DRB corresponding to a single LCH and a PDCP entity. Each QoS flow contains a PDU Set with varying PSI values. When the PDCP entity is configured with a requirement for PSIHI, a simplistic enhancement of the dropping mechanism based solely on PSI could result in the unintended discarding of PDUs or SDUs belonging to QoS flows that necessitate packet set integrity, thereby actively undermining the integrity requirements of the packet set.

Since both DSR and BSR fundamentally serve the purpose of reporting buffer sizes, with DSR providing a more granular reporting mechanism, it is essential for the DSR and BSR mechanisms to be harmonized with one another, encompassing the following aspects:
Selective configuration of either DSR or BSR;
Simultaneous configuration of DSR and BSR, wherein the triggering of DSR results in the cancellation of the corresponding BSR;
Simultaneous configuration of DSR and BSR, wherein both DSR and BSR are triggered concurrently, facilitating complementary information exchange and other related schemes.

These solutions are elaborately described in embodiments 1, 2, and 3.

Concurrently, in order to mitigate unnecessary DSRs, two mechanisms have been devised: a DSR mask mechanism based on data attributes and a DSR mask mechanism based on remaining time, grounded on the generated rules for triggering DSR.

On the other hand, the scheme based on SDU or PDU discard of PSI necessitates the differentiation of configuration information pertaining to the integrity indication of the packet set corresponding to the QoS flow associated with the SDU or PDU, which includes:
For QoS flows that require the PSI, it is pertinent to retain the existing discard mechanism based on a discard timer, or alternatively, to configure a discard mechanism that combines PSI with a discard timer, incorporating specific timeout values.
For QoS flows that do not necessitate the PSI, an enhanced discard mechanism based on PSI shall be employed, as delineated in embodiment 7. Furthermore, it encompasses the selection of distinct PSI-based discard schemes contingent upon varying levels of congestion, which is illustrated in embodiment 8.

The delay status report processing method can be executed within a communications system.

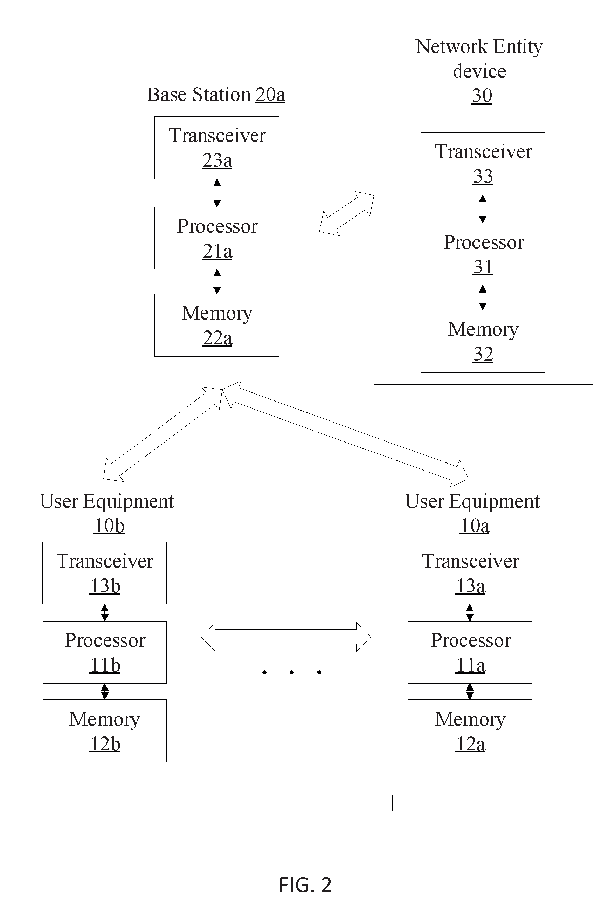

Referring to FIG. 2, a communications system comprising UE 10a, UE 10b, Base Station (BS) 20a, and Network Entity Device 30 executes the methods disclosed in the embodiments of the present disclosure. It is noted that FIG. 2 is illustrative and not limiting; the system may encompass additional UEs, BSs, and CN entities. The connections between devices and device components are depicted in the figure as lines and arrows. UE 10a may include a processor 11a, a memory 12a, and a transceiver 13a. UE 10b may comprise a processor 11b, a memory 12b, and a transceiver 13b. BS 20a may consist of a processor 21a, a memory 22a, and a transceiver 23a. The Network Entity Device 30 can include a processor 31, a memory 32, and a transceiver 33. Each of the processors 11a, 11b, 21a, and 31 can be configured to implement the functions, programs, and/or methods described herein. The various layers of the radio interface protocols can be realized within processors 11a, 11b, 21a, and 31. Each of the memories 12a, 12b, 22a, and 32 is operatively configured to store various programs and information necessary for the operation of the connected processors. Each transceiver 13a, 13b, 23a, and 33 is operationally connected to its respective processor, facilitating the transmission and/or reception of radio or wired signals. UE 10a can communicate with UE 10b via a sidelink. BS 20a may serve as an eNB, gNB, or one of the other types of radio nodes, and can allocate radio resources for UE 10a and UE 10b.

Each of the processors 11a, 11b, 21a, and 31 may comprise Application-Specific Integrated Circuits (ASICs), other chipsets, logic circuits, and/or data processing devices. Each of the memories 12a, 12b, 22a, and 32 may include Read-Only Memory (ROM), Random Access Memory (RAM), flash memory, storage cards, storage media, and/or other storage devices. Each of the transceivers 13a, 13b, 23a, and 33 may encompass baseband circuits and Radio Frequency (RF) circuits for processing RF signals. When this embodiment is implemented in software, the technologies described herein can be realized by means of modules, programs, functions, entities, etc., that perform the functions delineated herein. These modules may be stored in memory and executed by processors. The memory may be implemented within the processor or externally, with such memory communicating and being coupled to the processor through various methods known in the art.

The network entity device 30 may serve as a node within the Core Network (CN). The CN may encompass either the Long-Term Evolution Core Network (LTE CN) or the 5G Core (5GC), which comprises User Plane Function (UPF), Session Management Function (SMF), Access and Mobility Management Function (AMF), Unified Data Management (UDM), Policy Control Function (PCF), Control Plane/User Plane Separation (CUPS), Authentication Server (AUSF), Network Slice Selection Function (NSSF), and Network Exposure Function (NEF).

The examples of UE described herein may include either UE 10a or UE 10b. The examples of base stations described herein may include BS 20a. The uplink (UL) transmission of control signals or data may involve a transmission operation from the UE to the base station. Conversely, the downlink (DL) transmission of control signals or data may entail a transmission operation from the base station to the UE. The DL control signals may encompass Downlink Control Information (DCI) or Radio Resource Control (RRC) signals transmitted from the base station to a specific UE.

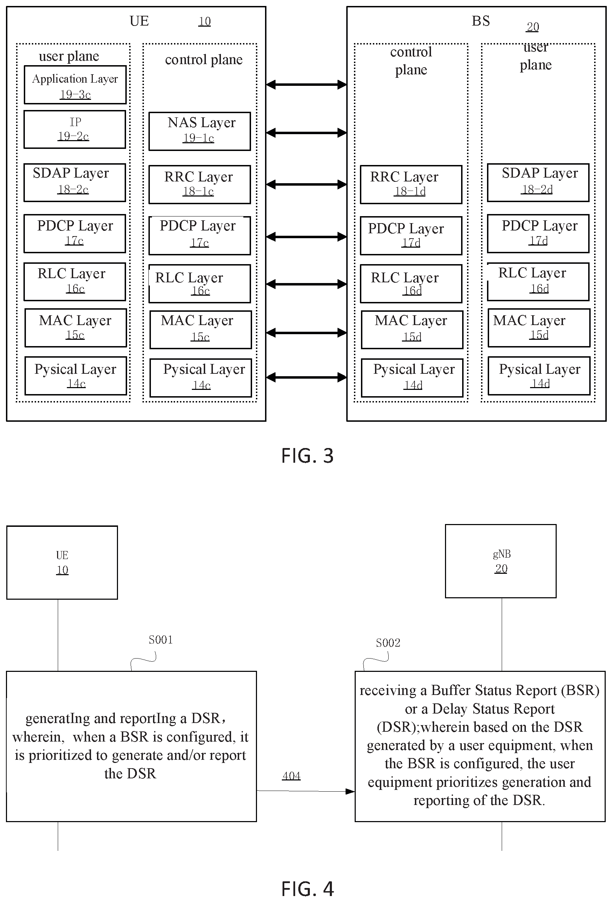

Referring to FIG. 3, one exemplary UE is depicted as UE 10, while one exemplary BS is illustrated as BS 20. UE 10 comprises both the user plane protocol stack and the control plane protocol stack. The control plane includes the physical layer (PHY layer or L1 layer) 14c, the MAC layer 15c, the RLC layer 16c, the PDCP layer 17c, the RRC layer 18-1c, and the NAS layer 19-1c. The user plane encompasses the physical layer (PHY layer or L1 layer) 14c, the MAC layer 15c, the RLC layer 16c, the PDCP layer 17c, the SDAP layer 18-2c, the IP layer 19-2c, and the application layer 19-3c.

BS 20 comprises both the user plane protocol stack and the control plane protocol stack. The control plane includes the physical layer (PHY layer or L1 layer) 14d, the MAC layer 15d, the RLC layer 16d, the PDCP layer 17d, and the RRC layer 18-1d. The user plane encompasses the physical layer (PHY layer or L1 layer) 14d, the MAC layer 15d, the RLC layer 16d, the PDCP layer 17d, the SDAP layer 18-2d, the IP layer 19-2d, and the application layer 19-3d.

For instance, when the application layer 19-3c of the UE 10 transmits a PDU to the application layer 19-3d of base station 20 via the lower layers (namely, the IP layer 19-2c, SDAP layer 18-2c, PDCP layer 17c, RLC layer 16c, MAC layer 15c, and physical layer 14c), the layers within the user equipment 10 act as sending protocol layer entities at the transmitting end, while the layers within the base station 20 function as receiving protocol layer entities at the receiving end. The disclosed embodiment may be implemented within the MAC layer. One or more steps (or modules) of the disclosed embodiment may be executed as a computer program, instructions, software modules stored in the memory of the user equipment 10 or base station 20, or as circuits or hardware modules within the processors of the user equipment 10 or base station 20, or as integrated circuit chips, circuits, or plugins of the transmitting device. The layer entities mentioned herein provide examples of the layers referenced in the description.

The layers depicted in FIG. 3 may conform to the NR (New Radio) radio communication system as defined by the 3GPP standards.

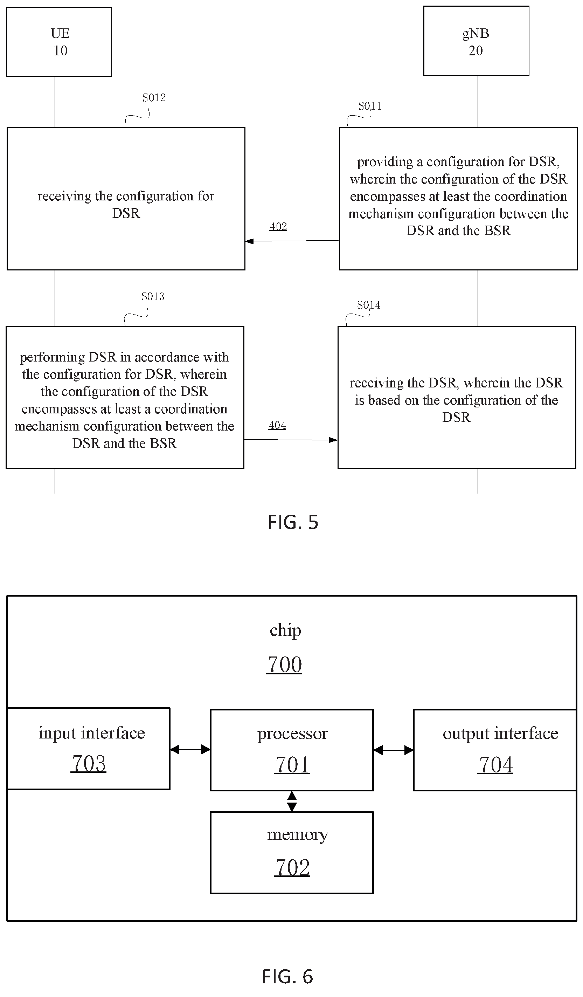

With reference to FIG. 4 and 5, a gNB 20 implements a wireless communication method. The gNB 20 may embody one implementation of the BS 20a. It is important to note that, while the gNB 20 is presented as an illustrative example within this description, the wireless communication method may be executed by a BS, which could be another gNB, an eNB, a base station that integrates both an eNB and a gNB, or a base station that extends beyond 5G technology. The UE 10 also executes a wireless communication method. The UE 10 may encompass one implementation of either UE 10a or UE 10b.

Referring to FIG. 4, the UE 10 generates and reports a DSR, wherein when a BSR is configured, it is prioritized to generate and/or report the DSR, such as the DSR 404(S001) illustrated in FIG. 4. The DSR comprises at least one remaining time information related to a data packet, along with the data volume information associated with the remaining time. This DSR is conveyed via a MAC CE, wherein the MAC CE specifically pertains to the DSR MAC CE. The data packet contains at least one PDU or SDU.

The base station receives a Buffer Status Report (BSR) or a Delay Status Report (DSR);wherein based on the DSR generated by a user equipment, when the BSR is configured, the user equipment prioritizes generation and reporting of the DSR. (for example, the DSR 404 depicted in FIG. 4) (S002). In one embodiment, the UE 10 receives configuration information for the DSR, wherein the DSR is generated or reported based on the received configuration information.

In certain embodiments of the present disclosure, the configuration information is received via a RRC message.

In certain embodiments of the present disclosure, all configuration information comprises at least one of the followings:
periodic DSR timer;
DSR retransmission timer;
Logical Channel Group (LCG);
DSR logical channel Scheduling Request (SR) delay timer;
application DSR logical channel SR delay timer;
mask DSR logical channel SR;
information related to at least one remaining time range; and
at least one data volume threshold.

In certain embodiments of the present disclosure, information related to at least one remaining time range corresponds to one or more remaining time ranges, with each remaining time range being associated with a specific level of remaining time range. It is characterized in that, for a LCG, the triggering condition of the conventional DSR comprises at least one of the followings:

When multiple remaining time ranges are defined, a minimum remaining time range corresponding to a data packet of the LCG is reduced to a smaller-tier remaining time range, indicating a downgrade in the level of the remaining time range associated with the data packet of the LCG.

When multiple remaining time ranges are defined, the minimum remaining time range corresponding to the data packet of the LCG is reduced to a smaller-tier remaining time range, indicating a downgrade in the level of the remaining time range associated with the data packet of the LCG, and the data volume corresponding to the minimum remaining time range reaches a predefined or preconfigured threshold.

When multiple remaining time ranges are defined, the remaining time range corresponding to the data packet of the LCG is reduced to the lowest-level remaining time range.

When multiple remaining time ranges are defined, the remaining time range corresponding to the data packet of the LCG is reduced to a level of the minimum remaining time range, and the data volume corresponding to the level of the minimum remaining time range reaches a predefined or pre-configured threshold.

When only a single remaining time range is defined, the remaining time range corresponding to the data packet of the LCG is reduced to the single remaining time range.

When only a single remaining time range is defined, the remaining time range corresponding to the data packet of the LCG is reduced to the single remaining time range, and the data volume corresponding to the single remaining time range reaches a predefined or preconfigured threshold.

Variation in the data volume corresponding to a remaining time range associated with the data packet of the LCG reaches a specific threshold.

A data packet corresponding to another logical channel with a higher priority compared to a logical channel to which existing data packets are associated; and
a buffer of the LCG transitions from a non-empty status to an empty status.

In certain embodiments of the present disclosure, the DSR shares a periodic BSR timer to trigger the periodic DSR; or, the DSR utilizes the periodic DSR timer.

In certain embodiments of the present disclosure, the configuration information for the DSR comprises a first data attribute of the periodic DSR timer, wherein the periodic DSR timer is configured according to the first data attribute, and the first data attribute includes one or more of the followings: LCG, LCH, QoS flow, PSI, and PSIHI.

In certain embodiments of the present disclosure, within the padding DSR, when the user equipment is allocated uplink resources, if a MAC PDU contains a padding bit carrying a DSR MAC Control Element (CE) along with the MAC subheader of the DSR MAC CE, the user equipment generates a DSR and transmits the DSR via the MAC PDU.

In certain embodiments of the present disclosure, the DSR shares a retransmission timer of the BSR for the purpose of retransmitting the DSR; or the DSR utilizes the DSR retransmission timer to trigger the retransmission of the DSR.

In certain embodiments of the present disclosure, wherein the remaining time information comprises at least one remaining time range, wherein the data volume is expressed as a buffer size, and the buffer size corresponding to the remaining time range is determined based on the second data attributes of the SDU or PDU included in the configuration information of the DSR, wherein the second data attributes include at least one of the followings:
The SDU or PDU of one or more logical channels is included in a computation of the buffer size corresponding to the remaining time range;
The SDU or PDU of one or more QoS flows is included in the computation of the buffer size corresponding to the remaining time range;
The SDU or PDU of one or more PSIs is included in the computation of the buffer size corresponding to the remaining time range;
The SDU or PDU of one or more PSIHI values is included in the computation of the buffer size corresponding to the remaining time range;
The SDU or PDU of one or more logical channels is excluded from the computation of the buffer size corresponding to the remaining time range;
The SDU or PDU of one or more QoS flows is excluded from the computation of the buffer size corresponding to the remaining time range;
The SDU or PDU of one or more PSIs is excluded from the computation of the buffer size corresponding to the remaining time range;
The SDU or PDU of one or more PSIHI values is excluded from the computation of the buffer size corresponding to the remaining time range.

In certain embodiments of the present disclosure, wherein the configuration information of the DSR further comprises a third data attribute for triggering or prohibiting the triggering of the DSR, wherein a SDU or a PDU corresponding to the third data attribute is configured to either trigger or prohibit the triggering of the DSR, including one or more of the followings:
A variation in the remaining time of the SDU or PDU in a buffer corresponding to one or more Logical Channel Groups (LCGs) will prohibit the triggering of the DSR or will disallow a inclusion of operations related to a computation of the remaining time and/or buffer size that could trigger the DSR;
A variation in the remaining time of the SDU or PDU of one or more Logical Channels (LCHs) will prohibit the triggering of the DSR or will disallow the inclusion of operations related to the computation of the remaining time and/or buffer size that could trigger the DSR;
A variation in the remaining time of the SDU or PDU of one or more Quality of Service (QoS) flows will prohibit the triggering of the DSR or will disallow the inclusion of operations related to the computation of the remaining time and/or buffer size that could trigger the DSR;
A variation in the remaining time of the SDU or PDU of one or more PSIs will prohibit the triggering of the DSR or will disallow the inclusion of operations related to the computation of the remaining time and/or buffer size that could trigger the DSR; and
A variation in the remaining time of the SDU or PDU of one or more PSIHI values will prohibit the triggering of the DSR or will disallow the inclusion of operations related to the computation of the remaining time and/or buffer size that could trigger the DSR.

A variation in the remaining time of the SDU or PDU in the buffer corresponding to one or more LCGs will trigger the DSR or involve operations related to the computation of the remaining time and/or buffer size that could trigger the DSR.

A variation in the remaining time of the SDU or PDU of one or more logical channels (LCHs) will trigger the DSR or involve operations related to the computation of the remaining time and/or buffer size that could trigger the DSR.

A variation in the remaining time of the SDU or PDU of one or more QoS flows will trigger the DSR or involve operations related to the computation of the remaining time and/or buffer size that could trigger the DSR.

A variation in the remaining time of the SDU or PDU of one or more PSIs will trigger the DSR or involve operations related to the computation of the remaining time and/or buffer size that could trigger the DSR; and

A variation in the remaining time of one or more SDUs or PDUs of PSIHI values will trigger the DSR or involve operations related to the computation of the remaining time and/or buffer size that could trigger the DSR.

In certain embodiments of the present disclosure, wherein the configuration information of the DSR includes information about remaining time range that is used to enable a DSR function; when remaining time of a Service Data Unit (SDU) or Protocol Data Unit (PDU) decreases to the remaining time range, the DSR function is enabled, the DSR is triggered; otherwise, triggering of the DSR is prohibited.

In certain embodiments of the present disclosure, wherein the configuration information of the DSR includes a fourth data attribute that enables the remaining time range of the DSR; based on the fourth data attribute, when the remaining time of the SDU or PDU corresponding to the fourth data attribute decreases to the remaining time range and if the DSR function is enabled, the DSR is triggered; otherwise, the triggering of the DSR is prohibited; the fourth data attribute comprises at least one of the followings: LCG, LCH, QoS flow, PSI, and PSIHI.

In certain embodiments of the present disclosure, wherein the configuration information of the DSR includes a timeout value for a DSR mask timer, when the user equipment generates a DSR message within a Media Access Control (MAC) entity, the DSR mask timer is actived, and no new DSRs are generated prior to expiration of the DSR mask timer.

In certain embodiments of the present disclosure, wherein the configuration information of the DSR further includes a timeout value for the DSR mask timer configured according to a fifth data attribute, when a SDU or PDU of the fifth data attribute generation of a DSR message, the DSR mask timer is activated, and no new DSRs are generated for the fifth data attribute or LCG corresponding to the fifth data attribute prior to the expiration of the DSR mask timer, wherein the timeout value of the DSR mask timer is configured according to the fifth data attribute using one or more of the following methods:

The timeout value of the DSR mask timer is configured for each LCG.

The timeout value of the DSR mask timer is configured for each logical channel; which is, when a SDU or PDU of the fifth data attribute triggers a generation of a DSR message, the DSR mask timer is activated, and no new DSRs are generated for the LCH or its corresponding LCG prior to the expiration of the DSR mask timer.

The timeout value of the DSR mask timer is configured for each QoS flow; which is, when a SDU or PDU of the fifth data attribute triggers a generation of a DSR message, the DSR mask timer is activated, and no new DSRs are generated for the QoS flow or its corresponding LCG prior to the expiration of the DSR mask timer.

The timeout value of the DSR mask timer is configured for a certain PSI configuration; which is, when a SDU or PDU of the fifth data attribute triggers a generation of a DSR message, the DSR mask timer is activated, and no new DSRs are generated for the PSI or its corresponding LCG prior to the expiration of the DSR mask timer.; or
The timeout value of the DSR mask timer is configured for a certain PSI configuration; which is, when a SDU or PDU of the fifth data attribute triggers a generation of a DSR message, the DSR mask timer is activated, and no new DSRs are generated for the PSIHI value or its corresponding LCG prior to the expiration of the DSR mask timer.

With reference to FIG. 5, the gNB 20 provides a configuration 402 for a DSR, wherein the configuration of the DSR comprises at least a coordination mechanism configuration between the DSR and the BSR (S011). In the embodiment of the present disclosure, the coordination mechanism configuration between the DSR and the BSR includes:
The configurations of the DSR and the BSR are mutually exclusive;
The simultaneous configuration of the DSR and the BSR, with a priority for the DSR reporting; or
The simultaneous generation of the DSR and the BSR.

The UE 10 receives the configuration 402 for the DSR (S012).

The UE 10 performs the DSR in accordance with the configuration 402 for the DSR, wherein the configuration of the DSR comprises at least a coordination mechanism configuration between the DSR and the BSR (S013). The DSR comprises a DSR information 404.

The gNB 20 receives the DSR, which comprises a DSR information 404, wherein the DSR is based on the configuration of the DSR. The DSR information 404 contained in the DSR comprises remaining time information pertaining to multiple packets, as well as data volume information corresponding to the remaining time information (S014). The multiple packets consist of multiple PDUs or SDUs.

In the embodiment of the present disclosure, wherein predetermined DSR triggering mechanisms include: conventional DSR, periodic DSR, or padding DSR

In the embodiment of the present disclosure, in the case of the periodic DSR, the DSR utilizes a shared timer with the BSR for the purpose of triggering the periodic DSR; alternatively, the DSR employ a distinct timer from the BSR, thereby triggering the periodic DSR based on the dedicated timer associated with the DSR.

**The coordination mechanism between the DSR and the BSR:**
Imbodiment 1: Configured to perform either the DSR or the BSR operations exclusively.

For an uplink LCG, the gNB (for instance, gNB 20) configures and instructs the UE, such as UE 10, to perform either the BSR or the DSR operations via RRC messages. Specifically, the gNB (e.g., gNB 20) transmits an RRC message to the UE (e.g., UE 10). The UE (e.g., UE 10) receives the RRC message. The RRC message may comprise a configuration information or instructions pertinent to the DSR operations. Specifically, method 1: In the case wherein the UE performs either the DSR or the BSR operations exclusively, if the RRC message contains the configuration information related to the DSR operations, the UE performs the DSR operations within the MAC entity; conversely, if the RRC message lacks the configuration information related to the DSR operations, the UE performs the BSR operations within the MAC entity. Method 2: The RRC message configures the indication for the LCG to report only the DSR information units. In other words, if an uplink LCG is configured to perform the DSR operations, the BSR operations will not be conducted for that LCG; rather, only the DSR operations will be performed. Simultaneously, the gNB will also configure, through the RRC message, the configuration information related to the DSR operations that includes at least one of the following types of information:
periodic DSR Timer (periodicDSR-Timer);
DSR Retransmission Timer (retxDSR-Timer);
LCG;
DSR logical channel SR delay timer (dSRLogicalChannelSR-DelayTimer);
application logical channel SR delay timer (dSRLogicalChannelSR-DelayTimerApplied);
mask DSR logical channel SR (dSRLogicalCh annelSR-Mask);
information related to at least one remaining time or the remaining time range;
Optional: at least one data volume threshold;

For an uplink LCG, it is essential to account for all data volumes associated with the LCG or the data volumes stipulated by predefined/configured regulatory requirements within a DSR MAC CE, specifically concerning buffer size. The methodology for calculating the data volume can be referred to in detail in sections 5.5 of 3GPP standard 38.322 and 5.6 of 38.323. The predefined/configured rules include:
The remaining time is less than the predefined/configured threshold; or,
The PSI exceeds the predefined/configured threshold; or,
The priority of the logical channel surpasses the predefined/configured threshold; or,
There exists a requirement for the PSIHI (with the PSIHI set to 1 or 0).

For instance, the buffer size of the LCG can be partitioned into several segments based on the remaining time information of all SDUs or PDUs stored in the buffer of the LCG, which can subsequently be reported within a DSR MAC CE. A DSR MAC CE may comprise one or more of the following types of information:
(1) The remaining time information;
(2) The data volume information corresponding to the remaining time information; and
(3) Indication information for the buffer size table corresponding to the buffer size information.

### (1) The remaining time information:

The gNB (for example, gNB 20) when configuring the DSR information for the UE (for instance, UE 10), may comprise:
One or more absolute time values; or
An index of a predefined table; or
Multiple time range informations.

One or more absolute time values are utilized to denote a time range, for instance, configuring a 10 ms time value to represent the interval from 0 to 10 ms. Alternatively, configuring the time values of 10 ms, 20 ms, and 30 ms to represent three distinct time ranges: 0 to 10 ms, 10 ms to 20 ms, and 20 ms to 30 ms, respectively. Additionally, one or more time range information sets, such as the groups of time intervals [0, 10] and [10, 20], are employed to articulate the specified time ranges of 0 to 10 ms and 10 ms to 20 ms, respectively.

In the reported DSR , the remaining time information corresponds to a specific configured time value, thereby indicating a particular time range. For instance, based on the aforementioned configuration, the value of 10 signifies the range from 0 to 10 ms; 20 indicates the interval from 10 ms to 20 ms; and 30 represents the span from 20 ms to 30 ms. Alternatively, employing the index numbers of the time ranges arranged in ascending order, according to the previously mentioned configuration, the number 1 signifies the range from 0 to 10 ms; 2 denotes the interval from 10 ms to 20 ms; and 3 represents the span from 20 ms to 30 ms. For buffer sizes that are outside of the configured time ranges, any other corresponding remaining time information may be indicated using a predefined special value, such as 0.

The predefined table:
In certain embodiments of the present disclosure, the DSR further comprises indicative information associated with a buffer size table corresponding to the buffer size information.

A predefined table comprises an index for the remaining time range as well as the corresponding remaining time ranges, as illustrated in the table below.

**Table 1**

| Index | Remaining Time Range (ms) |
|---|---|
| 1 | Remaining Time < 10 |
| 2 | 10 < Remaining Time < 20 |
| 3 | 20 < Remaining Time < 30 |
| 4 | 30 < Remaining Time < 40 |
| 5 | 40 < Remaining Time < 50 |
| 6 | Other |

The predefined table may be referred to as the remaining time range table. In the reported DSR, the remaining time information can correspond to an index in the table that represents a specific time range.

(2) The data volume information corresponding to the remaining time information, which is the buffer size information: optionally, the sum of the buffer sizes corresponding to multiple remaining time information shall represent the total buffer size associated with the LCG.

In particular, for a specific LCG, it is possible to further configure whether a certain data attribute is to be included in the buffer size calculation pertaining to the remaining time range based on specific data attributes. If a data attribute is configured to be excluded from the buffer size calculation within the remaining time range, then the SDUs or PDUs corresponding to the data attribute shall not be considered in the calculation of the buffer size for a time range. The remaining time information comprises multiple remaining time ranges, and the configuration of the DSR includes a first data attribute indicating the inclusion or exclusion of the respective data packets in the buffer size calculation for each of the multiple remaining time ranges, wherein the first data attribute includes one or more of the followings:
LCH: Refers to the inclusion or exclusion of the SDUs or PDUs of one or more LCH in the buffer size calculation associated with the remaining time range;
QoS Flow: Refers to the inclusion or exclusion of the SDUs or PDUs of one or more QoS flows in the buffer size calculation associated with the remaining time range;
PSI: Refers to the inclusion or exclusion of the SDUs or PDUs of one or more PSIs in the buffer size calculation associated with the remaining time range; and
PSIHI: Refers to the inclusion or exclusion of the SDUs or PDUs of one or more PSIHI in the buffer size calculation associated with the remaining time range.

(3) The indication information for the remaining time range table corresponding to the buffer size information: In the event that there are two or more time range tables corresponding to the buffer size information, the time range table indication information serves to identify or specify one of the time range tables.

In particular, for the type of DSR, it is categorized based on its triggering types, which include:
(1) Conventional DSR;
(2) Periodic DSR; and
(3) Padding DSR.

Conventional DSR, the triggering reasons include one or more of the followings:
The first triggering condition occurs when there is a change in the remaining time level. Specifically, a remaining time level of 1 corresponds to the range of 0 to 10 ms, a remaining time level of 2 corresponds to the range of 10 to 20 ms, and a remaining time level of 3 corresponds to the range of 20 to 30 ms. The condition is met when certain uplink data SDUs or PDUs within the buffer of a particular LCG experience a reduction in their remaining time, causing them to fall into a lower remaining time range. For instance, when three configured time values of 10 ms, 20 ms, and 30 ms correspond to the time ranges of 0 to 10 ms, 10 to 20 ms, and 20 to 30 ms respectively, a data packet transitioning from the time range of 20 to 30 ms to the range of 10 to 20 ms would trigger this condition. Furthermore, this condition is also satisfied when the cumulative data volume of multiple packets (SDUs or PDUs) whose remaining time has reduced to a lower remaining time range reaches a predefined or pre-configured threshold.

The second triggering condition occurs exclusively when the remaining time reaches the minimum level, defined as the range of 0 to 10 ms. The condition is satisfied when certain uplink data SDUs or PDUs within the buffer of a particular LCG experience a reduction in their remaining time, thereby falling into the minimum remaining time range. For example, when three configured time values of 10 ms, 20 ms, and 30 ms correspond to the time ranges of 0 to 10 ms, 10 to 20 ms, and 20 to 30 ms respectively, the remaining time transitions down to the range of 0 to 10 ms. Furthermore, this condition is also met when the cumulative data volume of SDUs or PDUs that have reached the minimum remaining time range attains a predefined or pre-configured threshold.

The third triggering condition is characterized by a variation in the data volume within a specific remaining time range reaching a designated threshold. This occurs when the data volume corresponding to a particular remaining time range within a certain LCG buffer achieves a predefined or pre-configured threshold. For instance, when three time values of 10 ms, 20 ms, and 30 ms are configured to represent the time ranges of 0 to 10 ms, 10 to 20 ms, and 20 to 30 ms respectively, and the data volume of SDUs or PDUs corresponding to the remaining time range of 10 to 20 ms increases or decreases to meet a predefined or pre-configured threshold.

In relation to the existing packets associated with a particular logical channel, packets corresponding to a logical channel with a higher priority arrive. Furthermore, the data volume of the arriving packets associated with the higher priority logical channel reaches a predefined or pre-configured threshold.

A certain LCG buffer transitions from a non-empty status to an empty status.

Periodic DSR: In the context of the periodic DSR, the DSR utilizes a shared timer in conjunction with the BSR to trigger the periodic DSR; alternatively, the DSR and the BSR utilize distinct timers, with the periodic DSR being triggered based on the dedicated timer assigned to the DSR. The BSR shares a periodic BSR timer configured by the gNB through RRC messages (periodic BSR timer). The DSR is consequently triggered when the periodic DSR timer times out. The periodic timer for the DSR can either be shared with the periodic BSR timer configured by the gNB (for instance, gNB 20) through RRC messages and its configuration information, or it can be separately configured by the gNB (for example, gNB 20) via RRC messages to establish a periodic DSR timer and its corresponding configuration details.

Furthermore, the periodic DSR timer may be defined and configured based on the data attributes of the SDU and PDU, wherein the second data attribute comprises:
LCG: The periodic DSR timer is configured according to the logical channel group; that is, when one or more SDUs or PDUs associated with the LCG attribute indicate the generation of a DSR message, the periodic DSR timer is initiated. During the interval prior to the expiration of the periodic DSR timer, no new DSRs shall be generated for the LCG.
LCH: The periodic DSR timer is configured according to the LCH; That is, when one or more SDUs or PDUs associated with the LCH attribute indicate the generation of a DSR message, the periodic DSR timer is initiated. Prior to the expiration of the periodic DSR timer, no new DSRs shall be generated for the LCH or the corresponding LCG associated with the LCH.
QoS flow: The periodic DSR timer is configured in accordance with the QoS flow. That is, when one or more SDUs or PDUs associated with the QoS flow attribute indicate the generation of a DSR message, the periodic DSR timer is initiated. Prior to the expiration of the periodic DSR timer, no new DSRs shall be generated for the QoS flow or the corresponding LCG associated with the QoS flow.
PSI: The periodic DSR timer is configured in accordance with a specific PSI. That is, when one or more SDUs or PDUs associated with the PSI identified as the PSI attribute indicate the generation of a DSR message, the periodic DSR timer is initiated. Prior to the expiration of the periodic DSR timer, no new DSRs shall be generated for the PSI or the corresponding LCG associated with the PSI; or
PSIHI: The periodic DSR timer is configured in accordance with the specified PSIHI. That is, when one or more SDUs or PDUs associated with the PSIHI value configured as indicated by the PSIHI indicate the generation of a DSR message, the periodic DSR timer is initiated. Prior to the expiration of the periodic DSR timer, no new DSRs shall be generated for the PSIHI or the corresponding LCG associated with the PSIHI.

Padding DSR: In the context of the Padding DSR, when the UE (e.g., UE 10) is allocated uplink resources, and if the padding bits of a MAC PDU are sufficient to accommodate a DSR MAC CE along with the MAC subheader of the DSR MAC CE, the UE (e.g., UE 10) generates a DSR and transmits it via the MAC PDU.

In various embodiments of the present disclosure, the DSR shares a common retransmission timer with the BSR for the purpose of retransmitting the DSR. Alternatively, the DSR may utilize a distinct retransmission timer from the BSR, wherein the retransmission of the periodic DSR is triggered by the dedicated retransmission timer specific to the DSR. For instance, the gNB (e.g.gNB 20) may configure a retransmission timer (retxDSR-Timer) for the DSR operation through an RRC message, or the DSR operation may share the retransmission timer (retxBSR-Timer) configured for the BSR by the gNB (e.g., gNB 20) via an RRC message. The retransmission of the DSR may occur using either the dedicated retransmission timer (retxDSR-Timer) or the shared retransmission timer of the BSR (retxBSR-Timer). When the UE (e.g., UE 10) transmits a DSR, it initiates the retransmission timer (either retxDSR-Timer or retxBSR-Timer); if the retransmission timer expires and the UE (e.g., UE 10) has yet to receive the corresponding acknowledgment message for the DSR from the gNB (e.g., gNB 20), such as a Hybrid Automatic Repeat Request (HARQ) acknowledgment message, the UE (e.g., UE 10) will retransmit the DSR.

In certain embodiments of the present disclosure, when the UE (e.g.UE 10) generates a DSR, and no uplink resources have been allocated, the DSR will further trigger a Scheduling Request (SR) to solicit the allocation of uplink resources from the gNB (e.g., gNB 20) for the UE (e.g., UE 10).

In various embodiments of the present disclosure, regarding the DSR , the gNB (for instance, gNB 20) configures the UE (for example, UE 10) with the application of the DSR logical channel SR delay timer (dSRLogicalChannelSR-DelayTimerApplied), the DSR logical channel SR delay timer (dSRLogicalChannelSR-DelayTimer), and the DSR logical channel SR mask (dSRLogicalChannelSR-Mask) via RRC messages. These configurations may be dedicated solely to DSR or may be shared between DSR and BSR . The UE (for instance, UE 10) is capable of utilizing the DSR logical channel SR delay timer (dSRLogicalChannelSR-DelayTimerApplied), the DSR logical channel SR delay timer (dSRLogicalChannelSR-DelayTimer), and the DSR logical channel SR mask (dSRLogicalChannelSR-Mask) as configured by the gNB (for example, gNB 20). Subsequently, the UE (for instance, UE 10) performs the following operations in accordance with the aforementioned configurations:
When the mask DSR logical channel SR is set to true, the DSR corresponding to the mask DSR logical channel SR associated with a logical channel will prohibit the triggering of the SR.

When the application DSR logical channel SR delay timer is set to true, the DSR logical channel SR delay timer is activated upon generation of the DSR corresponding to a logical channel associated with the application DSR logical channel SR delay timer; upon expiration of the DSR logical channel SR delay timer, an SR is triggered.

When the application DSR logical channel SR delay timer is set to false, an SR is triggered upon generation of the DSR corresponding to the logical channel associated with the application DSR logical channel SR delay timer.

In certain embodiments of the present disclosure, a UE (such as UE 10) may comprise one or more DSR information of LCGs within a DSR MAC CE.

In some embodiments of the present disclosure, a DSR MAC CE comprises DSRs for multiple LCGs, and for each LCG's DSR, buffer sizes and remaining time information are loaded according to magnitudes of remaining time range values.

Furthermore, the UE (for instance, UE 10) may prioritize the loading of the buffer sizes and remaining time information with lesser remaining time from among multiple LCGs within a DSR MAC CE; additionally, the UE (for instance, UE 10) may prioritize the loading of the buffer sizes and remaining time information corresponding to LCH with higher priority associated with the buffer sizes across multiple LCGs.

In certain embodiments of the present disclosure, the UE (such as UE 10) may opt to utilize different DSR MAC CE formats are selected to generate various types of DSR MAC CEs; for instance, a short DSR MAC CE, in which the number of bits allocated for the buffer size information is relatively low, such as 5 bits; or a long DSR MAC CE, wherein the number of bits allocated for the buffer size information is comparatively higher, such as 8 bits.

In certain embodiments of the present disclosure, when a SDU or a PDU corresponding to the DSR in a buffer is successfully transmitted or discarded, the DSR and the corresponding SR are both canceled.

In certain embodiments of the present disclosure, for a given LCG, after triggering generation of a DSR associated with the LCG and a SR corresponding to the DSR, when the SR is in a suspended status and a new DSR related to the LCG is triggered, cancel the generated DSR which was generated before the new DSR and a SR corresponding to the generated DSR..

Specifically, for a UE (for example, UE 10), when there is a simultaneous requirement to transmit the conventional DSR, the periodic DSR, and the padding DSR, the conventional DSR is accorded the highest priority, followed by the periodic DSR, while the padding DSR holds the lowest priority.

Specifically, a single MAC PDU is permitted to contain only one DSR.

**Embodiment 2: The DSR and BSR are configured simultaneously; however, the generation and reporting of the DSR take precedence.**

For an uplink LCG, the UE (for instance, UE 10) performs the BSR by default. Specifically, the gNB (for example, gNB 20) transmits a RRC message to the UE (for example, UE 10). The UE (for instance, UE 10) receives the RRC message, which may comprise configuration information or instructions pertinent to the DSR operations. The UE (for example, UE 10) performs DSR operations in accordance with the configurations specified by the gNB (for instance, gNB 20) via the RRC message. In a configuration where both DSR and BSR are simultaneously configured, with DSR being prioritized for reporting, if the RRC message comprises configuration information related to both the DSR and the BSR operations, the UE will perform the DSR and the BSR operations within the MAC entity. Conversely, if the RRC message does not comprise any configuration information regarding the DSR operations, the UE will solely perform the BSR operations within the MAC entity. It is noteworthy that the mechanisms for the DSR generation and the triggering conditions, as well as the information comprised within the DSR MAC CE and its configuration, have been elaborated upon in the preceding sections.

For an uplink LCG, when the DSR operations are configured, the UE (for example, UE 10) concurrently performs both the BSR and the DSR operations while ensuring mutual coordination between the two. Within a DSR MAC CE, it is imperative to account for the total data volume corresponding to the LCG being reported, or the data volume specified by predefined/configured rule (the methodology for calculating the data volume can be referenced in sections 5.5 of 3GPP standard 38.322 and 5.6 of 38.323), which pertains to the buffer size. The predefined/configured rules include the followings:
The remaining time is less than the predefined/configured threshold; or,
The PSI exceeds the predefined/configured threshold; or,
The priority of the logical channel surpasses the predefined/configured threshold; or,
There exists a requirement for the PHISI (with PSIHI set to either 1 or 0).

For instance, based on the remaining time information of all SDUs or PDUs within the buffer of the LCG, the total buffer size of this LCG can be segmented into several portions, which can then be reported in a DSR MAC CE. The information included in the DSR MAC CE and the specific actions related to DSR can be referenced in the corresponding content of Imbodiment 1. The BSR is reported in accordance with the existing mechanism, specifically conveying the data volume information corresponding to all elements within the LCG buffer. Concurrently, the BSR and DSR are coordinated with one or more of the methods outlined below:

For a LCG, after triggering generation of a DSR information associated with the LCG and a SR corresponding to the DSR information, when the SR is in a suspended status and a new BSR information is triggered for the LCG, the new BSR information and the SR corresponding to the new BSR information are canceled.

For a LCG, after the generation of DSR information corresponding to the LCG and the associated Scheduling Request (SR) has been triggered, if the SR is in a suspended status and a new BSR information trigger occurs for the LCG, the new BSR information and the SR corresponding to the new BSR information shall be invalidated.

**Embodiment 3: DSR and BSR are configured simultaneously, with DSR and BSR being generated and reported simultaneously.**

For an uplink LCG, the UE (for instance, UE 10) performs a BSR operation by default. The UE (for instance, UE 10) executes the DSR operation in accordance with the configuration provided by the gNB (for example, gNB 20). If the gNB (for example, gNB 20) does not configure the DSR operation, then the DSR operation will not be carried out; conversely, if the gNB (for example, gNB 20) has configured the DSR operation, the DSR operation will be performed. It is important to clarify that the manner of DSR generation and the reasons for its triggering have been described earlier, as well as the information contained within the DSR MAC CE and the configurations of the DSR.

Specifically, the gNB (for example, gNB 20) transmits a RRC message to the UE (for instance, UE 10). The UE (for example, UE 10) receives the RRC message, which may comprise configuration information or indications pertinent to the DSR operations. The UE (for instance, UE 10) performs the DSR operations in accordance with the configurations specified by the gNB (for example, gNB 20) via the RRC message. In the configuration where both the DSR and the BSR operations are simultaneously applicable, if the RRC message comprises configuration information relating to both the DSR and the BSR operations, the UE shall carry out both DSR and BSR operations within the MAC entity. Conversely, if the RRC message does not contain configuration information associated with the DSR operations, the UE will solely execute the BSR operations within the MAC entity.

If an uplink LCG is configured for the DSR operations, the UE (for instance, UE 10) simultaneously generates both the DSR and the BSR information. In this context, the DSR report conveys only a portion of the data volume contained within the LCG buffer, along with its corresponding remaining time information. The details encapsulated within the DSR MAC CE, as well as the specific DSR operations, can be referenced in the relevant content of Implementation Example 1. The BSR is reported in accordance with the existing mechanism, which entails conveying the data volume information pertaining to the corresponding LCG buffer. Specifically:
When the DSR is triggered, a DSR MAC Control Element (CE) and a BSR MAC CE are both generated.
When the BSR is triggered, a DSR MAC CE and a BSR MAC CE are both generated.

When the DSR MAC CE and the corresponding BSR MAC CE can be transmitted within the same MAC PDU, both the DSR MAC CE and the corresponding BSR MAC CE are transmitted concurrently.
When the DSR MAC CE and the corresponding BSR MAC CE cannot be transmitted within a single MAC PDU, priority shall be given to the transmission of the DSR MAC CE.
When the BSR is retracted, the corresponding DSR is also retracted.

It can be understood that when a MAC Protocol Data Unit (PDU) conveys both the DSR MAC CE and the BSR MAC CE, and resources of the MAC PDU are sufficient, the DSR MAC CE and the BSR MAC CE are conveyed concurrently;
when a MAC PDU conveys both the DSR MAC CE and the BSR MAC CE, and resources of the MAC PDU are scarcity transmission of the DSR MAC CE is prioritized.

### Embodiment 4: DSR mask based on data attribute

For an uplink LCG, the gNB (for instance, gNB 20) can configure the DSR mask parameters for the UE (for example, UE 10) via a RRC message. The DSR mask parameters can be configured based on the data attributes of either the SDU or the PDU. The MAC entity on the UE side (for instance, UE 10) will not trigger DSR for SDUs or PDUs corresponding to the configured data attributes. The data attributes corresponding to the DSR mask parameters may include one or more of the followings:
(1) LCG: If the DSR mask parameter for a LCG(logicalChannelGroupDSR-mask) is set to "mask required," then the MAC entity on the UE side (for instance, UE 10) will not trigger the DSR based on the remaining time range and/or changes in data volume of the SDUs or PDUs stored in the buffer associated with that LCG corresponding to the DSR mask parameter (logicalChannelGroupDSR-mask). Furthermore, operations related to the calculation of remaining time and data volume for SDUs or PDUs mapped to the LCG will not be performed. Alternatively, the remaining time for the SDUs or PDUs mapped to that LCG may be set to a special value, such as infinity or zero, to ensure the DSR is not triggered.
(2) LCH: If the DSR mask parameter for a specific LCH(logicalChannelDSR-Mask) is configured as "mask required," the MAC entity on the UE side (for example, UE 10) will not trigger the DSR based on the remaining time range and/or changes in data volume of the SDUs or PDUs mapped to the LCH associated with the DSR mask parameter. Furthermore, operations pertaining to the calculation of remaining time and data volume for the SDUs or PDUs mapped to the LCH will not be performed. Alternatively, the remaining time for the SDUs or PDUs mapped to that LCH may be set to a special value, such as infinity or zero, to ensure the DSR is not triggered.
(3) QoS Flow: If the QoS flow mask parameter for a specific QoS flow (qosFlowDSR-Mask) is configured as "mask required," the MAC entity on the UE side (for instance, UE 10) will not trigger the DSR based on the remaining time range and/or changes in data volume of the SDUs or PDUs originating from the corresponding QoS flow associated with the DSR mask parameter. Furthermore, operations pertaining to the calculation of remaining time and data volume for the SDUs or PDUs originating from the QoS flow will not be performed. Alternatively, the remaining time for the SDUs or PDUs from the QoS flow may be set to a special value, such as infinity or zero, to ensure the DSR is not triggered.
(4) PSI: If the PSI mask parameter for a specific PSI (psiDSR-Mask) is configured as "mask required," the MAC entity on the UE side (for example, UE 10) will not trigger the DSR based on the remaining time range and/or changes in data volume of the SDUs or PDUs that are identified by the PSI associated with the DSR mask parameter. Furthermore, operations related to the calculation of remaining time and data volume for the SDUs or PDUs identified by the PSI will not be performed. Alternatively, the remaining time for the SDUs or PDUs identified by the PSI may be set to a special value, such as infinity or zero, to ensure the DSR is not triggered.
(5) PSIHI: If the PSIHI mask parameter for a specific PSIHI (PSIHIDSR-Mask) is configured as "mask required," the MAC entity on the UE side (for example, UE 10) will not trigger the DSR based on the remaining time range and/or changes in data volume of the SDUs or PDUs associated with the QoS flow linked to the PSIHI mask parameter. Furthermore, operations related to the calculation of remaining time and data volume for the SDUs or PDUs originating from the QoS flow will not be performed. Alternatively, the remaining time for the SDUs or PDUs from the QoS flow may be set to a special value, such as infinity or zero, to ensure the DSR is not triggered.

Similarly, the parameters for triggering the DSR may also be configured via a RRC message sent to the UE (for instance, UE 10). In this context, the parameters for triggering DSR can be configured based on the data attributes of the SDUs or PDUs. When the data attributes corresponding to configured SDUs or PDUs are met, the MAC entity on the UE side (for example, UE 10) shall initiate a DSR. The data attributes related to the triggering DSR parameters, as well as their usage, bear resemblance to the previously mentioned parameters for mask DSR.

It is noteworthy that the data attribute-based DSR mask of Embodiment 4 can be combined with any of Embodiment 1, Embodiment 2, or Embodiment 3, thereby facilitating flexible control over the DSR mechanism.

### Embodiment 5: DSR mask based on the remaining time.

To report more granular DSR information, a gNB (e.g., gNB 20) may configure multiple remaining time ranges for a UE (e.g., UE 10). The UE then reports these ranges along with their corresponding buffer sizes in the DSR MAC CE. To reduce DSR reporting frequency, enabling DSR parameters can be configured for individual ranges to specify DSR activation thresholds. For example, when three time intervals (10 ms, 20 ms, and 30 ms) are configured to represent 0 ms~10 ms, 10 ms~20 ms, and 20 ms~30 ms, respectively, enabling DSR for the 0 ms~10 ms range while disabling it for the 10 ms~20 ms and 20 ms~30 ms ranges. Specifically, when configuring DSR parameters based on the remaining time range, one or more of the following data attributes may be considered:
(1) LCG: The DSR enabling parameter based on the LCG indicates whether DSR is triggered or not when the remaining time of the SDU or PDU mapped to the corresponding LCG reduces to the DSR mask remaining time range;
(2) LCH: The DSR enabling parameter based on the LCH indicates whether DSR is triggered or not when the remaining time of the SDU or PDU mapped to the corresponding LCH decreases to the DSR mask remaining time range;
(3) QoS flow: The DSR enabling parameter based on the QoS flow indicates whether DSR is triggered or not when the remaining time of the SDU or PDU originating from the corresponding QoS flow decreases to the DSR mask remaining time range;
(4) PSI: The DSR enabling parameter based on the PSI indicates whether DSR is triggered or not when the remaining time of the SDU or PDU identified by the corresponding PSI value decreases to the DSR mask remaining time range;
(5) PSIHI: The DSR enabling parameter based on PSIHI is configured to indicate whether DSR is triggered or not when the remaining time of the SDU or PDU corresponding to the specified PSIHI value decreases to the DSR mask remaining time range.

It is noteworthy that the DSR mask based on the remaining time of Embodiment 5 can be combined with any of Embodiment 1, Embodiment 2, or Embodiment 3, thereby enabling flexible control over DSR.

### Embodiment 6: DSR mask based on a Timer.

For an uplink LCG, the system defines a DSR mask timer (dsrProhibit-timer), which can be configured by the gNB (for instance, gNB 20) via a RRC message to specify the timeout value for the UE (for example, UE 10). The timer can be utilized multiple times across various scenarios, including simultaneous usage, with the timeout values potentially being either identical or different. In the MAC entity on the UE side (e.g., UE 10), each time a DSR message is generated, the DSR mask timer is activated. Prior to the expiration of the mask timer, no new DSRs are generated; furthermore, before the timer expires, no new BSRs are produced. As an illustration, the configuration information for the DSR includes the timeout value for the aforementioned DSR mask timer, which is established according to the fifth data attribute. When the SDU or PDU corresponding to the fifth data attribute triggers the generation of a DSR message, the DSR mask timer is initiated. Before the expiration of the DSR mask timer, no new DSRs are generated for the fifth data attribute or the LCG corresponding to the fifth data attribute. Optionally, the configuration of the timeout value for the DSR mask timer can be based on one or more of the following data attributes:
(1) LCG: This refers to the utilization of the DSR mask timer and the timeout value of the DSR mask timer configured according to the LCG. Specifically, when the SDU or PDU associated with the LCG triggers the generation of a DSR message, the DSR mask timer is initiated. Prior to the expiration of the DSR mask timer (corresponding to the timeout value), no new DSRs are generated for the LCG.
(2) LCH: This pertains to the utilization of the DSR mask timer and the timeout value of the DSR mask timer configured according to the LCH. Specifically, when the SDU or PDU associated with the LCH triggers the generation of a DSR message, the DSR mask timer is initiated. Prior to the expiration of the DSR mask timer (corresponding to the timeout value), no new DSRs are generated for the LCH or the LCG corresponding to the LCH.
(3) QoS Flow: This refers to the utilization of the DSR mask timer and the timeout value of the DSR mask timer configured according to the QoS flow. Specifically, when the SDU or PDU associated with the QoS flow triggers the generation of a DSR message, the DSR mask timer is initiated. Prior to the expiration of the DSR mask timer (corresponding to the timeout value), no new DSRs are generated for the QoS flow or the LCG corresponding to the QoS flow.
(4) PSI: This refers to the utilization of the DSR mask timer and the timeout value of the DSR mask timer configured in accordance with a specific PSI. Specifically, when the SDU or PDU identified by the PSI triggers the generation of a DSR message, the DSR mask timer is initiated. Prior to the expiration of the DSR mask timer (corresponding to the timeout value), neither the PSI nor the LCG associated with the PSI will generate any new DSRs.
(5) PSIHI: This pertains to the utilization of the DSR mask timer and the timeout value of the DSR mask timer as defined by the PSIHI configuration. Specifically, when an SDU or PDU configured as the PSIHI triggers the generation of a DSR message, the DSR mask timer is initiated. Prior to the expiration of the DSR mask timer (which corresponds to the specified timeout value), no new DSRs are generated for the PSIHI value or the LCG corresponding to the PSIHI value.

It is noteworthy that the DSR mask based on a timer in Embodiment 6 can be integrated with any of Embodiments 1, 2, or 3, thereby enabling flexible control of DSR.

### Discarding based on PSI:

### Embodiment 7: Discarding based on PSI and/or PSIHI.

In the event of network congestion, the gNB (for instance, gNB 20) transmits congestion indication information to the UE (for example, UE 10) via RRC messages or control protocol units (such as PDCP control PDU, RLC control PDU, or MAC CE), optionally indicating a PSI threshold simultaneously. Corresponding to the PDCP entity on the UE side (e.g., UE 10), the discard operation must be conducted based on the PSIHI information associated with the QoS flow. For instance, the discard of PDUs or SDUs from the PDU set corresponding to QoS flows with PSIHI information indicating no integrity transmission takes precedence over the discard of PDUs or SDUs from the PDU set corresponding to QoS flows with PSIHI information indicating the necessity of integrity transmission. Specifically, the PDCP entity of the UE (for instance, UE 10) discards the SDU or PDU from the PDU set by employing one of the following methods:
(1) According to the data radio bearers (DRB), for the PDU Set corresponding to QoS flows with the PSIHI information indicates the integrity transmission is required, SDUs or PDUs will be discarded based on the standard discard timer mechanism. Conversely, for the PDU Set corresponding to a QoS flow with the PSIHI information indicates the integrity transmission is not required, SDUs or PDUs will be discarded utilizing an enhanced discard mechanism based on PSIHI. The enhanced discard mechanism based on PSIHI comprises:

The scheme based on the PSI threshold, and
The scheme based on PSI combined with a discard timer (PSI + discard timer).

In certain embodiments of the present disclosure, the configuration may also be implemented according to LCG, wherein the configuration information of the LCG will be applicable to all DRBs mapped to that LCG.

The gNB (for example, gNB 20) configures the UE (for instance, UE 10) via the transmission of RRC messages, which may include explicit or implicit configurations: for the PSIHI, the information is set for QoS flows that do not require integrity transmission, thereby applying an enhanced discard mechanism based on the PSI; for the PSIHI, the information is set for QoS flows that require integrity transmission, the existing fundamental discard timer mechanism will be employed for discarding.

Instance 1: In the scenario where QoS flow 1 and QoS flow 2 are mapped to the identical logical channel DRB1, QoS flow 1 is configured with a PSIHI indicating that integrity transmission is required, while QoS flow 2 is configured with a PSIHI indicating that integrity transmission is not required. Regarding DRB1, the configuration stipulates that for the packet set corresponding to QoS flows with the PSIHI information indicating integrity transmission is not required, a discard mechanism based on the PSI threshold in conjunction with a discard timer is implemented. Conversely, for the packet set indicating integrity transmission is required, the established basic discard timer mechanism is utilized for packet disposal. Additionally, in a non-congested status, a discard timer timeout value of 1=50 ms is configured, and in the event of congestion, timeout values of 2=20 ms and 3=30 ms are established. Consequently, in the PDCP entity corresponding to DRB1 on the UE side, during a non-congested status-defined by the absence of congestion indications or decongestion indications-the discard timers for SDUs or PDUs from both QoS flow 1 and QoS flow 2 utilize the timeout value of 1=50 ms. Upon receiving congestion indication information, which includes a PSI threshold, the discard timers for SDUs or PDUs from QoS flow 1 will continue to employ the timeout value of 1=50 ms, regardless of the PSI information distinguishing individual SDUs or PDUs. For QoS flow 2,

(2) In accordance with the QoS flow, for the PSIHI information, integrity transmission is required for the QoS flow, the configuration stipulates specific timeout values for the discard timer, including: Configuring a discard timer timeout value applicable to all PDUs or SDUs of the QoS flow, irrespective of the PSI information of the PDUs or SDUs; as illustrated in the configuration and usage method of QoS flow 1 in instance 1.

Instance 2: the PSIHI information of QoS flow 4 requires integrity transmission. For the QoS flow, a discard timer timeout value of 1=50 ms is configured. Conversely, the PSIHI information of QoS flow 5 indicates the integrity transmission is not required; therefore, for the QoS flow, configure the scheme based on PSI threshold, with a discard timer timeout value of 1=40 ms. Furthermore, both QoS flow 4 and QoS flow 5 are configured to be mapped to the same DRB2. Consequently, in the PDCP entity corresponding to DRB2 on the UE side, under non-congested conditions, the SDUs or PDUs from QoS flow 1 and QoS flow 2 utilize timeout values of 1=50 ms and 1=40 ms, respectively. Upon receiving congestion indication information, which includes a PSI threshold, the discard timer for all SDUs or PDUs from QoS flow 1 continues to employ a timeout value of 1=50 ms, irrespective of the PSI information of different SDUs or PDUs. In the case of QoS flow 2, if the PSI of the SDU or PDU is greater than and/or equal to the PSI threshold, it is discarded immediately; whereas, if the PSI of the SDU or PDU is less than and/or equal to the PSI threshold, the discard timer is set to utilize the timeout value of 1=40 ms. For the discard scheme involving the PSI and the discard timer (PSI + discard timer), specific one or multiple discard timer timeout values are configured for the corresponding QoS flow.

Instance 3: The PSIHI information for QoS flow 3 indicates the integrity transmission is required, with two configured timeout values, specifically timeout value 4 set to be 50 ms and timeout value 5 set to be 60 ms. In the context of the PDCP entity on the UE side, during non-congested conditions, the discard timer associated with SDUs or PDUs corresponding to QoS flow 3 utilizes timeout value 4, which is 50 ms. Conversely, upon the receipt of a network congestion indication, the discard timer for the SDUs or PDUs of QoS flow 3 is adjusted to utilize timeout value 5, set at 60 ms. Notably, for QoS flow 3, no differentiation is made regarding the PSI information of individual SDUs or PDUs.

The gNB (for instance, gNB 20) facilitates the configuration process by transmitting RRC messages to the UE (for example, UE 10), which encompass one or more of the following configuration parameters:
The QoS flow related to the PSIHI information;
The discard mechanisms and/or related parameters based on QoS flow and/or corresponding PSIHI information;
The discard mechanisms and/or related parameters based on the DRB and/or the QoS flow PSIHI information;
The discard mechanisms and/or related parameters based on the LCH and/or the QoS flow PSIHI information.

In the event that the network recovers from a status of congestion to a normal status, the gNB (for example, gNB 20) transmits a congestion relief indication to the UE (for instance, UE 10) via RRC messages or PDCP control PDUs. The PDCP entity on the UE side (for example, UE 10) executes SDU or PDU discards based on the standard discard timer mechanism, irrespective of the PSIHI information of the QoS flow or the PSI information of the PDU or SDU.

### Embodiment 8: Discarding based on congestion level and PSI

In the event of network congestion, the gNB (for instance, gNB 20) transmits congestion indication information to the UE (for example, UE 10) via RRC messages or control protocol units (such as PDCP control PDUs, RLC control PDUs, or MAC CEs). The congestion indication information further comprises one or more of the following types of information:
Congestion severity indication information,
Application scenario information;
Business type information;

Optionally, simultaneously indicate a PSI threshold. Corresponding to the PDCP entity on the UE side (for example, UE 10), different discard mechanisms are selected based on the congestion level indication information, and/or application scenario information, and/or business type information. Specifically, the PDCP entity of the UE (for example, UE 10) references one of the following embodiments for the SDU or PDU discard of the PDU Set:
(1) In the event of a high congestion level, discarding is performed based on the PSI threshold scheme; otherwise, discarding is performed based on the PSI in conjunction with the discard timer (PSI + discard timer) scheme.
(2) If the business type during congestion is delay sensitively, discarding is performed based on the PSI threshold scheme; otherwise, discarding is performed based on the PSI in conjunction with the discard timer (PSI + discard timer) scheme.
(3) If the application scenario necessitates a high level of security, discarding is performed based on the PSI threshold scheme; otherwise, discarding is performed based on the scheme that utilizes the PSI combined with the discard timer (PSI + discard timer).

In the event that the network recovers from a status of congestion to a normal status, the gNB (for instance, gNB 20) transmits a congestion relief indication to the UE (for example, UE 10) via RRC messages or PDCP control PDUs. The PDCP entity on the UE side (for instance, UE 10) discards SDUs or PDUs in accordance with the standard discard timer mechanism, without differentiating between the PSIHI information pertaining to QoS flows and the PSI information associated with the PDUs or SDUs.

With reference to FIG. 6, the present embodiment additionally provides a chip 700, which may correspond to the user equipment 10 described in this application. This chip 700 can execute the corresponding processes of the various methods implemented by the user equipment 10 in the present embodiment. The chip 700 comprises a processor 701, which is capable of invoking and executing computer programs from memory to implement the methods outlined in the present embodiment.

Optionally, the chip 700 may also encompass a memory 702. In this configuration, the processor 701 is capable of invoking and executing computer programs stored in memory 702 to implement the methods delineated in the embodiments of the present application.

The memory 702 may constitute a discrete component that is independent of the processor 701, or it may be integrated within the processor 701 itself.

Optionally, the chip 700 may further comprise an input interface 703. The processor 701 is capable of controlling the input interface 703 to facilitate communication with other devices or chips, specifically enabling it to receive messages or data transmitted by such other devices or chips.

Optionally, the chip 700 may additionally incorporate an output interface 704. The processor 701 is capable of managing the output interface 704 to establish communication with other devices or chips, specifically allowing it to transmit messages or data to such other devices or chips.

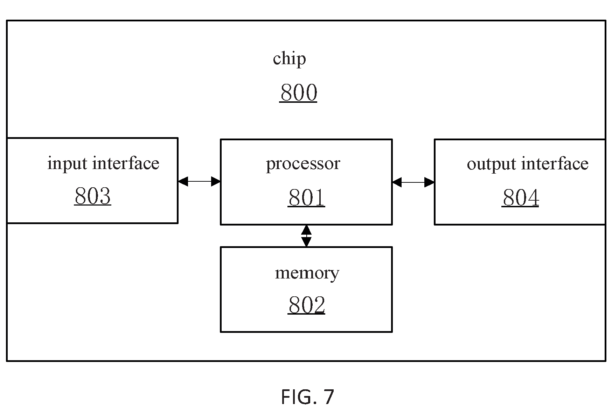

Referring to Figure 7, the present application embodiment further provides an alternate chip 800, which may correspond to the gNB 20 as described in this application embodiment. The chip 800 is capable of executing the corresponding processes implemented by the gNB 20 in various methods delineated in this application embodiment. This chip 800 comprises a processor 801, which can invoke and execute a computer program stored in memory 802 to implement the methods outlined in this application embodiment.

Optionally, the chip 800 may also encompass memory 802. In this configuration, the processor 801 is capable of invoking and executing a computer program stored in memory 802 to implement the methods outlined in this application embodiment.

In this context, memory 802 may exist as a discrete device independent of processor 801, or it may be integrated within processor 801 itself.

Optionally, the chip 800 may also encompass an input interface 803. In this arrangement, the processor 801 is capable of controlling the input interface 803 to facilitate communication with other devices or chips, specifically enabling the acquisition of messages or data transmitted by such external devices or chips.

Optionally, the chip may also include an output interface 804. In this configuration, the processor 801 is equipped to manage the output interface 804 to establish communication with other devices or chips, specifically enabling the transmission of messages or data to such external devices or chips.

It should be understood that the processor described in the embodiments of this application may constitute an integrated circuit chip endowed with signal processing capabilities. During implementation, the steps outlined in the aforementioned method can be executed through the integrated logic circuits of the hardware within the processor or through instructions in software form. The aforementioned processor may take the form of a general-purpose processor, a Digital Signal Processor (DSP), an Application Specific Integrated Circuit (ASIC), a Field Programmable Gate Array (FPGA), or other programmable logic devices, discrete gates or transistor logic devices, as well as discrete hardware components. It is capable of realizing or executing all methods, steps, and logic block diagrams disclosed in the embodiments of this application. The general-purpose processor may be a microprocessor or any conventional processor. The steps of the methods disclosed in this application can be directly realized by the execution of a hardware-decoding processor, or executed via a combination of hardware and software modules within the decoding processor. The software modules may reside in various mature storage media in this technical field, including random access memory (RAM), flash memory, read-only memory (ROM), programmable read-only memory (PROM), or electrically erasable programmable memory (EEPROM), as well as registers. This storage media is located in memory, from which the processor retrieves information and, in conjunction with its hardware, completes the aforementioned method steps.

It is understood that the memory in the embodiments of the present application may be classified as either volatile memory or non-volatile memory, or may encompass a combination of both volatile and non-volatile types. Non-volatile memory may include elements such as Read-Only Memory (ROM), Programmable Read-Only Memory (PROM), Erasable Programmable Read-Only Memory (EPROM), Electrically Erasable Programmable Read-Only Memory (EEPROM), or flash memory. Volatile memory may consist of Random Access Memory (RAM), which is utilized as an external high-speed buffer. By way of illustrative but non-limiting example, various forms of RAM may be employed, including Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink DRAM (SLDRAM), and Direct Rambus RAM (DR RAM). It should be noted that the memory described in the systems and methods delineated herein is intended to encompass, but is not limited to, these specific types as well as any other suitable forms of memory.

It should also be understood that the aforementioned memory serves as an illustrative but non-restrictive description; for instance, the memory in the embodiments of the present application may additionally comprise Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink DRAM (SLDRAM), as well as Direct Rambus RAM (DR RAM), among others. In other words, the memory delineated in the embodiments of the present application is intended to encompass, but is not limited to, these specific types and any other suitable forms of memory.

The embodiments of the present application further provide a computer program product, comprising computer program instructions.

Optionally, the aforementioned computer program product may be implemented within the gNB 20 of the embodiments presented in this application, wherein the computer program instructions enable the computer to execute the respective processes of the methods realized by gNB 20 as described in the embodiments of the present application. For the sake of brevity, further elaboration is omitted here.

Optionally, the aforementioned computer program product may be implemented within the user equipment 10 of the embodiments presented in this application, wherein the computer program instructions enable the computer to execute the respective processes of the methods realized by user equipment 10 as described in the embodiments of the present application. For the sake of brevity, further elaboration is omitted here.

The embodiments of the present application also provide a computer program.

Optionally, the computer program may be applied to the gNB 20 described in the embodiments of the present application, whereby, upon execution of the computer program on a computer, the computer performs the respective processes of the various methods implemented by gNB 20 in the embodiments of the present application. For the sake of brevity, further elaboration is omitted here.

Optionally, the computer program may be applied to the user equipment 10 as disclosed in the embodiments of the present application, whereby, upon execution of the computer program on a computer, the computer executes the respective processes associated with the various methods implemented by user equipment 10 in the embodiments of the present application. For the sake of brevity, further elaboration is omitted here.

A person of ordinary skill in the art would recognize that the units and algorithmic steps described in the various examples disclosed herein can be realized through electronic hardware, or through a combination of computer software and electronic hardware. Whether these functions are executed in a hardware or software manner is contingent upon the specific application of the technological solution and the design constraints imposed. Professionals in the field may adopt different methods to realize the described functionalities for each specific application; however, such implementations should not be considered to fall outside the scope of the present application.

It is evident to those skilled in the art that, for the purposes of convenience and conciseness in the description, the specific operational processes of the aforementioned systems, devices, and units can be referenced to the corresponding processes outlined in the previously discussed methods. Consequently, further elaboration on this matter will be omitted.

In the various embodiments provided herein, it should be understood that the disclosed systems, devices, and methods may be realized through alternative implementations. For instance, the described device embodiments are merely illustrative; the partitioning of the units represents only one form of logical functional division. In practical applications, alternative partitioning may be adopted, allowing for the combination of multiple units or components, or their integration into another system. Additionally, certain features may be omitted or not executed. Furthermore, the couplings or direct connections or communication links depicted or discussed may manifest through various interfaces, with indirect couplings or communication connections between the devices or units potentially taking electrical, mechanical, or other forms.

The units described as separate components may either be physically distinct or not. The components presented as units may be either physically constituted units or may coexist in a single location, or alternatively, be distributed across multiple network units. Depending on the specific requirements, a selection of some or all units may be employed to fulfill the objectives of the embodiment presented herein.

Furthermore, the functional units in the various embodiments of this application may be integrated within a single processing unit, or may exist as individually distinct entities. Additionally, two or more units may be integrated into one single unit.

If this functionality is realized in the form of a software functional unit and sold or utilized as an independent product, it may be stored on a computer-readable storage medium. Based on this understanding, the technical solutions proposed in this application, or the portions that contribute to the existing technology, may be embodied as a software product. This computer software product is stored on a storage medium and comprises several instructions to enable a computing device (which may be a personal computer, server, or network device, among others) to execute all or part of the steps outlined in the various embodiments of this application. The aforementioned storage medium is a non-volatile storage medium, which includes various media capable of storing program code, such as USB flash drives, external hard drives, read-only memory (ROM), random access memory (RAM), disks, or optical discs.

It is understood by a person of ordinary skill in the art that the aforementioned various embodiments represent specific implementations of the present application, and that in practical applications, various modifications can be made in terms of form and detail without departing from the spirit and scope of this application.

## Claims

1. A delay status report processing method, executed in a user equipment, comprising:
generating and reporting a Delay Status Report (DSR), wherein, when a Buffer Status Report (BSR) is configured, generation and/or reporting of the DSR is prioritized.

2. The method of claim 1, further comprising:
receiving a configuration information for the DSR, wherein the DSR is generated or reported based on the configuration information.

3. The method of claim 1, wherein the DSR comprises remaining time information related to at least one data packet and corresponding data volume information related to the remaining time information, and is reported via a Media Access Control Control Element (MAC CE), wherein the MAC CE is designated as a DSR MAC CE.

4. The method of claim 3, wherein the data packet comprises at least one Protocol Data Unit (PDU) or Service Data Unit (SDU).

5. The method of claim 2, wherein the configuration information is received via a Radio Resource Control (RRC) message;
wherein the configuration information includes one or more of the followings:
periodic DSR timer;
DSR retransmission timer;
Logical Channel Group (LCG);
DSR logical channel Scheduling Request (SR) delay timer;
application DSR logical channel SR delay timer;
mask DSR logical channel SR;
information related to at least one remaining time range; and
at least one data volume threshold.

6. The method of claim 5, wherein predetermined DSR triggering mechanisms include: conventional DSR, periodic DSR, or padding DSR.

7. The method of claim 6, wherein the information related to the at least one remaining time range corresponds to one or more remaining time ranges, with each remaining time range being uniquely associated with a corresponding level of remaining time range.

8. The method of claim 7, wherein, for a LCG, a triggering condition of the conventional DSR comprises at least one of the followings:
when multiple remaining time ranges are defined, a minimum remaining time range corresponding to a data packet of the LCG is reduced to a smaller-tier remaining time range, indicating a downgrade in the level of the remaining time range associated with the data packet of the LCG;
when multiple remaining time ranges are defined, the minimum remaining time range corresponding to the data packet of the LCG is reduced to a smaller-tier remaining time range, indicating a downgrade in the level of the remaining time range associated with the data packet of the LCG, and the data volume corresponding to the minimum remaining time range reaches a predefined or preconfigured threshold;
when multiple remaining time ranges are defined, the remaining time range corresponding to the data packet of the LCG is reduced to the lowest-level remaining time range;
when multiple remaining time ranges are defined, the remaining time range corresponding to the data packet of the LCG is reduced to a level of the minimum remaining time range, and the data volume corresponding to the level of the minimum remaining time range reaches a predefined or pre-configured threshold;
when only a single remaining time range is defined, the remaining time range corresponding to the data packet of the LCG is reduced to the single remaining time range;
when only a single remaining time range is defined, the remaining time range corresponding to the data packet of the LCG is reduced to the single remaining time range, and the data volume corresponding to the single remaining time range reaches a predefined or preconfigured threshold;
variation in the data volume corresponding to a remaining time range associated with the data packet of the LCG reaches a specific threshold;
a data packet corresponding to another logical channel with a higher priority compared to a logical channel to which existing data packets are associated; and
a buffer of the LCG transitions from a non-empty status to an empty status.

9. The method of claim 6, wherein the DSR shares a periodic BSR timer to trigger the periodic DSR; or the DSR utilizes the periodic DSR timer.

10. The method of claim 9, wherein the configuration information for the DSR comprises a first data attribute of the periodic DSR timer, wherein the periodic DSR timer is configured according to the first data attribute, and the first data attribute includes one or more of the followings: LCG, LCH, Quality of Service (QoS) flow, PDU Set Importance Indicator (PSI), and PDU Set Integrated Handling Indication (PSIHI).

11. The method of claim 6, wherein, within the padding DSR, when the user equipment is allocated uplink resources, if a MAC PDU contains a padding bit carrying a DSR MAC Control Element (CE) along with the MAC subheader of the DSR MAC CE, the user equipment generates a DSR and transmits the DSR via the MAC PDU.

12. The method of claim 5, wherein the DSR shares a retransmission timer of the BSR for the purpose of retransmitting the DSR; or the DSR utilizes the DSR retransmission timer to trigger the retransmission of the DSR.

13. The method of claim 1, wherein when the user equipment generates the DSR and no uplink resources for transmitting the DSR have been allocated, the DSR triggers a Scheduling Request (SR).

14. The method of claim 5 or 13, wherein the user equipment is configured with the application DSR logical channel SR delay timer, the DSR logical channel SR delay timer, and the mask DSR logical channel SR, based on the application DSR logical channel SR delay timer, the DSR logical channel SR delay timer, and the mask DSR logical channel SR, the user equipment performs the following operations:
when the mask DSR logical channel SR is set to true, the DSR corresponding to the mask DSR logical channel SR associated with a logical channel will prohibit the triggering of the SR;
when the application DSR logical channel SR delay timer is set to true, the DSR logical channel SR delay timer is activated upon generation of the DSR corresponding to a logical channel associated with the application DSR logical channel SR delay timer; upon expiration of the DSR logical channel SR delay timer, an SR is triggered;
when the application DSR logical channel SR delay timer is set to false, an SR is triggered upon generation of the DSR corresponding to the logical channel associated with the application DSR logical channel SR delay timer.

15. The method of claim 13, wherein when a SDU or a PDU corresponding to the DSR in a buffer is successfully transmitted or discarded, the DSR and the SR corresponding to the DSR are both canceled.

16. The method of claim 5, wherein, for a given LCG, after triggering generation of a DSR associated with the LCG and a SR corresponding to the DSR, when the SR is in a suspended status and a new DSR related to the LCG is triggered, cancel the generated DSR which was generated before the new DSR and a SR corresponding to the generated DSR.

17. The method of claim 3, wherein a DSR MAC CE comprises DSRs for multiple LCGs, and for each LCG's DSR, buffer sizes and remaining time information are loaded according to magnitudes of remaining time range values.

18. The method of claim 3, wherein different DSR MAC CE formats are selected to generate various types of DSR MAC CEs, wherein the types of the DSR MAC CEs include:
short DSR MAC CE and long DSR MAC CE.

19. The method of claim 3, wherein the DSR further comprises indication information related to a buffer size table corresponding to a buffer size information.

20. The method of claim 5, wherein the configuration information comprises an indication information that specifies the reporting of only the DSR, wherein the indication information including at least one of the followings:
a configuration information for a DSR allocated to a LCG in a RRC message;
an information unit for a LCG that indicates the reporting of only the DSR in a RRC message.

21. The method of claim 20, wherein if the configuration information comprises the indication information that specifies the reporting of only the DSR, the user equipment is restricted to only triggering generation and reporting of the DSR, while triggering of generation and reporting of the BSR is prohibited.

22. The method of claim 1, wherein, when the BSR is configured, prioritizing the generation and/or reporting of the DSR includes: for a Logical Channel Group (LCG), after triggering generation of a BSR information associated with the LCG and a SR corresponding to the BSR information, when the SR is in a suspended status and a new DSR related to the LCG is triggered, cancel the generated DSR which was generated before the new DSR and a SR corresponding to the generated DSR.

23. The method of claim 1, wherein when the BSR is configured, prioritizing the generation and/or reporting of the DSR includes: for a Logical Channel Group (LCG), after triggering generation of a DSR information associated with the LCG and a SR corresponding to the DSR information, when the SR is in a suspended status and a new BSR information is triggered for the LCG, the new BSR information and the SR corresponding to the new BSR information are canceled.

24. The method of claim 1, wherein,
when the DSR is triggered, a DSR MAC Control Element (CE) and a BSR MAC CE are both generated;
when the BSR is triggered, a DSR MAC CE and a BSR MAC CE are both generated;
when the BSR is retracted, the corresponding DSR is also retracted.

25. The method of claim 24, wherein when the BSR is configured, prioritizing the generation and/or reporting of DSR includes: when a MAC Protocol Data Unit (PDU) conveys both the DSR MAC CE and the BSR MAC CE, and resources of the MAC PDU are sufficient, the DSR MAC CE and the BSR MAC CE are conveyed concurrently; and
when a MAC PDU conveys both the DSR MAC CE and the BSR MAC CE, and resources of the MAC PDU are scarcity transmission of the DSR MAC CE is prioritized.

26. The method of claim 3, wherein the remaining time information comprises at least one remaining time range, wherein the data volume is expressed as a buffer size, and the buffer size corresponding to the remaining time range is determined based on a second data attributes of SDU or PDU included in the configuration information of the DSR, wherein the second data attributes include at least one of the followings:
the SDU or PDU of one or more logical channels is included in a computation of the buffer size corresponding to the remaining time range;
the SDU or PDU of one or more Quality of Service (QoS) flows is included in the computation of the buffer size corresponding to the remaining time range;
the SDU or PDU of one or more PDU Set Importance Indicators (PSIs) is included in the computation of the buffer size corresponding to the remaining time range;
the SDU or PDU of one or more PDU Set Integrated Handling Indication (PSIHI) values is included in the computation of the buffer size corresponding to the remaining time range;
the SDU or PDU of one or more logical channels is excluded from the computation of the buffer size corresponding to the remaining time range;
the SDU or PDU of one or more QoS flows is excluded from the computation of the buffer size corresponding to the remaining time range;
the SDU or PDU of one or more PSIs is excluded from the computation of the buffer size corresponding to the remaining time range;
the SDU or PDU of one or more PSIHI values is excluded from the computation of the buffer size corresponding to the remaining time range.

27. The method of claim 1, wherein the configuration information of the DSR further comprises a third data attribute for triggering or prohibiting the triggering of the DSR, wherein a Service Data Unit (SDU) or a Protocol Data Unit (PDU) corresponding to the third data attribute is configured to either trigger or prohibit the triggering of the DSR, including one or more of the followings:
a variation in the remaining time of the SDU or PDU in a buffer corresponding to one or more Logical Channel Groups (LCGs) will prohibit the triggering of the DSR or will disallow a inclusion of operations related to a computation of the remaining time and/or buffer size that could trigger the DSR;
the variation in the remaining time of the SDU or PDU of one or more Logical Channels (LCHs) will prohibit the triggering of the DSR or will disallow the inclusion of operations related to the computation of the remaining time and/or buffer size that could trigger the DSR;
the variation in the remaining time of the SDU or PDU of one or more Quality of Service (QoS) flows will prohibit the triggering of the DSR or will disallow the inclusion of operations related to the computation of the remaining time and/or buffer size that could trigger the DSR;
the variation in the remaining time of the SDU or PDU of one or more PDU Set Importance Indicators (PSIs) will prohibit the triggering of the DSR or will disallow the inclusion of operations related to the computation of the remaining time and/or buffer size that could trigger the DSR;
the variation in the remaining time of the SDU or PDU of one or more PDU Set Integrated Handling Indication (PSIHI) values will prohibit the triggering of the DSR or will disallow the inclusion of operations related to the computation of the remaining time and/or buffer size that could trigger the DSR;
the variation in the remaining time of the SDU or PDU in the buffer corresponding to one or more LCGs will trigger the DSR or involve operations related to the computation of the remaining time and/or buffer size that could trigger the DSR;
the variation in the remaining time of the SDU or PDU of one or more logical channels (LCHs) will trigger the DSR or involve operations related to the computation of the remaining time and/or buffer size that could trigger the DSR;
the variation in the remaining time of the SDU or PDU of one or more QoS flows will trigger the DSR or involve operations related to the computation of the remaining time and/or buffer size that could trigger the DSR;
the variation in the remaining time of the SDU or PDU of one or more PSIs will trigger the DSR or involve operations related to the computation of the remaining time and/or buffer size that could trigger the DSR; and
the variation in the remaining time of one or more SDUs or PDUs of PSIHI values will trigger the DSR or involve operations related to the computation of the remaining time and/or buffer size that could trigger the DSR.

28. The method of claim 1, wherein the configuration information of the DSR includes information about remaining time range that is used to enable a DSR function; when remaining time of a Service Data Unit (SDU) or Protocol Data Unit (PDU) decreases to the remaining time range, the DSR function is enabled, the DSR is triggered; otherwise, triggering of the DSR is prohibited.

29. The method of claim 28, wherein the configuration information of the DSR includes a fourth data attribute that enables the remaining time range of the DSR; based on the fourth data attribute, when the remaining time of the SDU or PDU corresponding to the fourth data attribute decreases to the remaining time range and if the DSR function is enabled, the DSR is triggered; otherwise, the triggering of the DSR is prohibited; the fourth data attribute comprises at least one of the followings: Logical Channel Group(LCG), Logical Channel (LCH), Quality of Service (QoS) flow, PDU Set Importance Indicator(PSI), and PDU Set Integrated Handling Indication (PSIHI).

30. The method of claim 5, wherein the configuration information of the DSR includes a timeout value for a DSR mask timer, when the user equipment generates a DSR message within a Media Access Control(MAC) entity, the DSR mask timer is activated, and no new DSRs are generated prior to expiration of the DSR mask timer.

31. The method of claim 30, wherein the configuration information of the DSR further includes a timeout value for the DSR mask timer configured according to a fifth data attribute, when a Service Data Unit (SDU) or Protocol Data Unit (PDU) of the fifth data attribute triggers generation of a DSR message, the DSR mask timer is activated, and no new DSRs are generated for the fifth data attribute or LCGs corresponding to the fifth data attribute prior to the expiration of the DSR mask timer;
wherein the timeout value of the DSR mask timer is configured according to the fifth data attribute using one or more of the following methods:
the timeout value of the DSR mask timer is configured for each LCG;
the timeout value of the DSR mask timer is configured for each logical channel;
the timeout value of the DSR mask timer is configured for each QoS flow;
the timeout value of the DSR mask timer is configured for a certain PSI configuration; or
the timeout value of the DSR mask timer is configured for each PSIHI configuration.

32. A user equipment device, comprising:
a processor configured to invoke and execute a computer program stored in a memory, thereby enabling the device equipped with the processor to perform the method as recited in any of claims 1 to 31.

33. A chip, **characterized by** comprising:
a processor configured to invoke and execute a computer program stored in memory, thereby enabling a device equipped with said processor to perform the method of any one of claims 1 to 31.

34. A non-transitory computer-readable storage medium **characterized by** storing a computer program, wherein said computer program enables a computer to execute the method of any one of claims 1 to 31.

35. A computer program product **characterized by** comprising a computer program, wherein said computer program enables a computer to execute the method of any one of claims 1 to 31.

36. A delay status report processing method, executed in a network node, comprising:
receiving a Buffer Status Report (BSR) or a Delay Status Report (DSR);
wherein based on the DSR generated by a user equipment, when the BSR is configured, the user equipment prioritizes generation and reporting of the DSR.

37. The method of claim 36, further comprising:
sending a configuration information for the DSR, wherein the DSR is generated or reported based on the configuration information.

38. The method of claim 36, wherein the DSR comprises remaining time information related to at least one data packet and corresponding data volume information related to the remaining time information, and is reported via a Media Access Control Control Element (MAC CE), wherein the MAC CE is designated as a DSR MAC CE.

39. The method of claim 38, wherein the data packet comprises at least one Protocol Data Unit (PDU) or Service Data Unit (SDU).

40. The method of claim 37, wherein the configuration information is sent via a Radio Resource Control (RRC) message;
wherein the configuration information includes one or more of the followings:
periodic DSR timer;
DSR retransmission timer;
Logical Channel Group (LCG);
DSR logical channel Scheduling Request (SR) delay timer;
application DSR logical channel SR delay timer;
mask DSR logical channel SR;
information related to at least one remaining time range; and
at least one data volume threshold.

41. The method of claim 40, wherein the configuration information for the DSR comprises a first data attribute of the periodic DSR timer, wherein the periodic DSR timer is configured according to the first data attribute, and the first data attribute includes one or more of the followings: LCG, LCH, Quality of Service (QoS) flow, PDU Set Importance Indicator (PSI), and PDU Set Integrated Handling Indication (PSIHI).

42. The method of claim 36, wherein the configuration information comprises an indication information that specifies the reporting of only the DSR, wherein the indication information including at least one of the followings:
a configuration information for a DSR allocated to a LCG in a RRC message;
an information unit for a LCG that indicates the reporting of only the DSR in a RRC message.

43. The method of claim 36, wherein the remaining time information comprises at least one remaining time range, wherein the data volume is expressed as a buffer size, and the buffer size corresponding to the remaining time range is determined based on a second data attributes of SDU or PDU included in the configuration information of the DSR, wherein the second data attributes include at least one of the followings:
the SDU or PDU of one or more logical channels is included in a computation of the buffer size corresponding to the remaining time range;
the SDU or PDU of one or more Quality of Service (QoS) flows is included in the computation of the buffer size corresponding to the remaining time range;
the SDU or PDU of one or more PDU Set Importance Indicators (PSIs) is included in the computation of the buffer size corresponding to the remaining time range;
the SDU or PDU of one or more PDU Set Integrated Handling Indication (PSIHI) values is included in the computation of the buffer size corresponding to the remaining time range;
the SDU or PDU of one or more logical channels is excluded from the computation of the buffer size corresponding to the remaining time range;
the SDU or PDU of one or more QoS flows is excluded from the computation of the buffer size corresponding to the remaining time range;
the SDU or PDU of one or more PSIs is excluded from the computation of the buffer size corresponding to the remaining time range;
the SDU or PDU of one or more PSIHI values is excluded from the computation of the buffer size corresponding to the remaining time range.

44. The method of claim 36, wherein the configuration information of the DSR further comprises a third data attribute for triggering or prohibiting the triggering of the DSR, wherein a Service Data Unit (SDU) or a Protocol Data Unit (PDU) corresponding to the third data attribute is configured to either trigger or prohibit the triggering of the DSR, including one or more of the followings:
a variation in the remaining time of the SDU or PDU in a buffer corresponding to one or more Logical Channel Groups (LCGs) will prohibit the triggering of the DSR or will disallow a inclusion of operations related to a computation of the remaining time and/or buffer size that could trigger the DSR;
the variation in the remaining time of the SDU or PDU of one or more Logical Channels (LCHs) will prohibit the triggering of the DSR or will disallow the inclusion of operations related to the computation of the remaining time and/or buffer size that could trigger the DSR;
the variation in the remaining time of the SDU or PDU of one or more Quality of Service (QoS) flows will prohibit the triggering of the DSR or will disallow the inclusion of operations related to the computation of the remaining time and/or buffer size that could trigger the DSR;
the variation in the remaining time of the SDU or PDU of one or more PDU Set Importance Indicators (PSIs) will prohibit the triggering of the DSR or will disallow the inclusion of operations related to the computation of the remaining time and/or buffer size that could trigger the DSR;
the variation in the remaining time of the SDU or PDU of one or more PDU Set Integrated Handling Indication (PSIHI) values will prohibit the triggering of the DSR or will disallow the inclusion of operations related to the computation of the remaining time and/or buffer size that could trigger the DSR;
the variation in the remaining time of the SDU or PDU in the buffer corresponding to one or more LCGs will trigger the DSR or involve operations related to the computation of the remaining time and/or buffer size that could trigger the DSR;
the variation in the remaining time of the SDU or PDU of one or more logical channels (LCHs) will trigger the DSR or involve operations related to the computation of the remaining time and/or buffer size that could trigger the DSR;
the variation in the remaining time of the SDU or PDU of one or more QoS flows will trigger the DSR or involve operations related to the computation of the remaining time and/or buffer size that could trigger the DSR;
the variation in the remaining time of the SDU or PDU of one or more PSIs will trigger the DSR or involve operations related to the computation of the remaining time and/or buffer size that could trigger the DSR; and
the variation in the remaining time of one or more SDUs or PDUs of PSIHI values will trigger the DSR or involve operations related to the computation of the remaining time and/or buffer size that could trigger the DSR.

45. The method of claim 36, wherein the configuration information of the DSR includes information about remaining time range that is used to enable a DSR function; when the remaining time of a Service Data Unit (SDU) or Protocol Data Unit (PDU) decreases to the remaining time range, the DSR function is enabled, the DSR is triggered; otherwise, triggering of the DSR is prohibited.

46. The method of claim 45, wherein the configuration information of the DSR includes a fourth data attribute that enables the remaining time range of the DSR; based on the fourth data attribute, when the remaining time of the SDU or PDU corresponding to the fourth data attribute decreases to the remaining time range and if the DSR function is enabled, the DSR is triggered; otherwise, the triggering of the DSR is prohibited; the fourth data attribute comprises at least one of the followings: Logical Channel Group(LCG), Logical Channel (LCH), Quality of Service (QoS) flow, PDU Set Importance Indicator(PSI), and PDU Set Integrated Handling Indication (PSIHI).

47. The method of claim 36, wherein the configuration information of the DSR includes a timeout value for a DSR mask timer, when the user equipment generates a DSR message within a Media Access Control(MAC) entity, the DSR mask timer is actived, and no new DSRs are generated prior to the expiration of the DSR mask timer.

48. The method of claim 47, wherein the configuration information of the DSR further includes a timeout value for the DSR mask timer configured according to a fifth data attribute, when a Service Data Unit (SDU) or Protocol Data Unit (PDU) of the fifth data attribute triggers generation of a DSR message, the DSR mask timer is activated, and no new DSRs are generated for the fifth data attribute or LCGs corresponding to the fifth data attribute prior to the expiration of the DSR mask timer;
wherein the timeout value of the DSR mask timer is configured according to the fifth data attribute using one or more of the following methods:
the timeout value of the DSR mask timer is configured for each LCG;
the timeout value of the DSR mask timer is configured for each logical channel;
the timeout value of the DSR mask timer is configured for each QoS flow;
the timeout value of the DSR mask timer is configured for a certain PSI configuration; or
the timeout value of the DSR mask timer is configured for each PSIHI configuration.

49. A base station, **characterized by** comprising:
A processor configured to invoke and execute a computer program stored in memory, enabling the device equipped with the aforementioned processor to perform the method as recited in any of claims 36 to 48.

50. A chip, **characterized by** comprising:
A processor, configured to invoke and execute a computer program stored in memory, thereby enabling a device equipped with the aforementioned processor to perform the method outlined in any of claims 36 to 48.

51. A non-transitory computer-readable storage medium, **characterized in that** it stores a computer program, which enables a computer to perform the method outlined in any of claims 36 to 48.

52. A computer program product, **characterized by** comprising a computer program that enables a computer to execute the method as recited in any of claims 36 to 48.
